Europäisches Patentamt

**European Patent Office**

Office européen des brevets

(11) Numéro de publication: **0 293 994 B1**

(12) **FASCICULE DE BREVET EUROPEEN**

(45) Date de publication de fascicule du brevet: **01.04.92** (51) Int. Cl.⁵: **H02M 7/529**

(21) Numéro de dépôt: **88201090.3**

(22) Date de dépôt: **31.05.88**

(54) **Automate de commande rapprochée et procédé de commande d'un convertisseur statique en vue de l'alimentation d'une machine électrique.**

(30) Priorité: **03.06.87 FR 8708017**

(43) Date de publication de la demande:
**07.12.88 Bulletin 88/49**

(45) Mention de la délivrance du brevet:
**01.04.92 Bulletin 92/14**

(84) Etats contractants désignés:
**CH DE FR IT LI NL SE**

(56) Documents cités:
**GB-A- 2 186 127**
**US-A- 4 337 429**
**US-A- 4 419 615**

(73) Titulaire: **CENTRE NATIONAL DE LA RECHER-CHE SCIENTIFIOUE (CNRS)**
**13 Ouai Anatole France**
**F-75700 Paris(FR)**

(72) Inventeur: **Grandpierre, Marcel**
**23 rue des Arbustes**
**F-31500 Toulouse(FR)**
Inventeur: **Hapiot, Jean-Claude**
**70 rue de la Faourette**
**F-31100 Toulouse(FR)**

(74) Mandataire: **Barre, Philippe**
**Cabinet Barre-Gatti-Laforgue 95 rue des Amidonniers**
**F-31069 Toulouse Cédex(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services

## Description

L'invention concerne un procédé de commande d'un convertisseur statique composé d'un ensemble d'interrupteurs, en vue de l'alimentation d'un machine électrique. Elle s'étend à un automate de commande rapprochée, adapté pour assurer la mise en oeuvre dudit procédé.

Les automates de commande rapprochée comprennent, da façon traditionnelle, une mémoire morte dans laquelle est préalablement écrit un motif de commande représentatif de la succession des états que doivent adopter les interrupteurs du convertisseur statique. Cette mémoire est lue séquentiellement afin de délivrer vers le convertisseur un signal de commande cyclique fonction du type de machine électrique à alimenter et du régime désiré. Ces automates sont spécifiques d'un type de machine donné et présentent le défaut de ne pas permettre de moduler le régime de la machine.

Par ailleurs, un automate de commande d'un type plus perfectionné est décrit dans l'article suivant : "Cardoso Filho, Farines et Vieira, CONUMEL 83 (Congrès de TOULOUSE), commande et surveillance d'un onduleur triphasé à modulation de largeur d'impulsion". Cet automate comprend une chaîne de mémorisation, composée d'une mémoire morte permettant de stocker plusieurs motifs de commande, d'une mémoire vive contenant le motif en cours et d'un registre contenant une fraction de ce motif (états des interrupteurs à chaque instant échantillonné du cycle). Un tel automate permet de modifier le régime de la machine en chargeant dans la mémoire vive un nouveau motif contenu dans la mémoire morte. Pendant ce chargement, le registre est figé de façon que la commande du convertisseur puisse se poursuivre sans discontinuité ; dans ces conditions, il est impératif que la durée du chargement soit plus courte que la durée séparant deux instants échantillonnés du cycle, sous peine d'interruption de la commande.

Un tel automate constitue un dispositif notablement amélioré par rapport aux automates traditionnels, mais présente toutefois plusieurs défauts. En premier lieu, la nécessité d'une grande rapidité des échanges conduit à l'utilisation de matériels de haute performance travaillant à fréquence élevée, dont les coûts sont très importants. De plus, le procédé utilisé implique une grande complexité logicielle pour gérer les échanges mémoire morte/mémoire vive/registre. En outre le procédé est soumis à des risques de défaut de fonctionnement en cas d'échanges entre mémoires accidentellement trop longs, la machine électrique étant alors déconnectée de la commande. Au surplus, comme dans le cas des automates traditionnels, un tel automate possède une structure adaptée de façon spécifique à un type de machine et ne peut commander un type différent.

En outre le brevet US 4.337.429 décrit un automate possédant deux mémoires qui sont séquentiellement permutées pour acquérir ou délivrer un motif de commande.

La présente invention se propose de fournir un procédé de commande et un automate palliant les défauts sus-évoqués. Elle vise à permettre d'effectuer des modifications de régime, en ligne, à tout instant du cycle de commande, et ce, tout en assurant en continu la commande sans risque d'interruption ou de déconnexion accidentelle.

Un objectif de l'invention est de fournir un automate de commande qui bénéficie d'un caractère d'universalité lui permettant de commander les principaux types de machines électriques existantes, et en particulier les machines électriques à courant alternatif autopilotées dotées de capteurs rotoriques délivrant des informations de position de leur rotor.

Le procédé et l'automate conformes à l'invention sont applicable à tout processus de commande s'effectuant par l'intermédiaire d'un convertisseur statique composé d'un ensemble d'interrupteurs, chacun à deux états, ouvert ou fermé, en vue de délivrer vers ledit convertisseur un signal de commande des états de ses interrupteurs (SCI), ce signal étant fonction d'informations de commande et, le cas échéant, d'informations issues de capteurs.

Le procédé de commande visé par l'invention consiste :

- à utiliser deux mémoires, chacune apte à contenir un motif de commande (M) représentatif d'une succession de configuration d'états, chaque configuration étant constituée par des états déterminés de l'ensemble des interrupteurs du convertisseur statique,
- à engendrer un signal d'échantillonnage (AL), apte à assurer, pour chaque mémoire, une lecture séquentielle du motif de commande, configuration par configuration, ledit signal d'échantillonnage (AL) étant engendré à partir des informations de position issues du capteur rotorique, de façon à comprendre, pour chaque tour de rotor, une succession d'adresses de lecture dans les mémoires,
- à engendrer un signal de permutation (SP, $\overline{SP}$), portant des ordres de permutation complémentaires des modes lecture/écriture des deux mémoires de sorte que celles-ci restent en permanence en mode différent,
- dans une phase d'initialisation, à écrire et mémoriser un premier motif de commande dans la mémoire se trouvant en mode écriture, dite première mémoire, et sur ordre du signal de permutation, (SP, $\overline{SP}$) à permuter les modes des deux mémoires,

- dans une première phase :
  . à lire de façon répétitive le premier motif de commande contenue dans ladite première mémoire à partir du signal d'échantillonnage (AL) en vue d'engendrer un signal de sortie de première mémoire (SM$_1$), constitué par une répétition du premier motif de commande,
  . à écrire et mémoriser un deuxième motif de commande dans l'autre mémoire, dite seconde mémoire, pendant la lecture de la première mémoire,
  . sur ordre du signal de permutation (SP, $\overline{SP}$) à permuter les modes des deux mémoires de façon à mettre la première mémoire en mode écriture en vue de la mémorisation éventuelle d'un nouveau motif de commande, et à mettre la seconde mémoire en mode lecture de façon à lire, de manière répétitive, le deuxième motif de commande à partir du signal d'échantillonnage (AL) en vue d'engendrer un signal de sortie de deuxième mémoire (SM$_2$), constitué par une répétition du deuxième motif de commande,
- à poursuivre les permutations des deux mémoires sur ordre du signal de permutation, en vue du déroulement de phases successives similaires à la première phase, et à affecter, au cours de chaque phase, la sortie de la mémoire en mode lecture à la commande du convertisseur statique de façon à délivrer vers celui-ci un signal de commande (SCI) constitué par la succession (SM) des signaux de sortie de première mémoire (SM$_1$) et signaux de sortie de deuxième mémoire (SM$_2$).

Une première version de l'invention permettant d'assurer le réglage de l'angle interne des machines synchrones autopilotées consiste à écrire les motifs de commande dans les mémoires à partir de motifs de base prédéfinis, avec un décalage d'adresses commandé par le calculateur de façon que chaque motif écrit corresponde au motif de base avec un décalage des configurations d'état, fonction de l'angle interne désiré. La machine est ainsi alimentée avec la même onde de tension (puisque les motifs sont constitués par la même succession de configurations d'états), mais avec un décalage différent roue polaire/champ tournant, c'est-à-dire un angle interne différent (puisque les motifs sont écrits avec des configurations d'états décalées). Une variante équivalente au mode de mise en oeuvre ci-dessus décrit consiste à ne pas modifier les motifs à l'écriture mais à lire les motifs écrits avec un décalage d'adresses commandé par le calculateur en vue d'obtenir le réglage d'angle interne désiré.

Dans le cas des machines asynchrones autopilotées, une autre version du procédé permettant de régler la fréquence des courants rotoriques consiste à lire les motifs de commande dans les mémoires, avec un décalage d'adresses amené à varier de façon continue dans le temps, de façon que chaque motif lu corresponde au motif écrit avec un décalage des configurations d'état, fonction de la fréquence des courants rotoriques désirée.

Dans le procédé de l'invention, que la machine soit synchrone ou asynchrone, une des deux mémoires est en permanence affectée à la commande des interrupteurs du convertisseur ; l'autre mémoire est alors disponible et permet simultanément de stocker un nouveau motif de commande en vue de la prochaine modification de régime à réaliser. Les deux opérations (opération de lecture dans, une mémoire pour commande, opération d'écriture dans l'autre mémoire pour stockage) s'effectuent en parallèle et de façon totalement asynchrone : de la sorte, le convertisseur est commandé en continu sans risque de déconnexion, cependant que l'écriture des nouveaux motifs, qui est totalement indépendante de cette commande sur le plan temporel, peut être assurée par un calculateur banalisé au rythme de celui-ci, les caractéristiques de ce calculateur n'étant pas liées à celles du convertisseur commandé et de la machine qu'il alimente. Pour assurer l'autopilotage de machines à courant alternatif, le procédé prend en compte les informations de position issues du capteur rotorique associé à ces machines, pour engendrer un signal d'échantillonnage (AL) comprenant, pour chaque tour de rotor, une succession d'adresses de lecture dans les mémoires. On obtient ainsi un fonctionnement naturellement stable de la machine quel que soit son régime de fonctionnement. Ce régime peut être modifié à tout moment grâce à l'écriture de motifs appropriés assurant lors de leur lecture, soit un réglage de l'angle interne (machines synchrones) ou de la fréquence des courants rotoriques (machines asynchrones), soit un réglage de la tension d'alimentation de la machine, soit une combinaison des deux.

Le réglage de la tension d'alimentation de la machine peut être indépendant de celui de l'angle interne ou de la fréquence des courants rotoriques et, le cas échéant, se cumuler avec celui-ci. Pour assurer ce réglage de tension, les motifs de commande écrits dans les mémoires sont engendrés par le calculateur de façon que chaque motif possède des états correspondant aux états ouverts des interrupteurs, en nombre et répartition fonctions de l'amplitude du fondamental et du facteur de forme de la tension d'alimentation désirée. Ce processus permet de régler l'amplitude du fondamental de la tension d'alimentation et d'éliminer un certain nombre d'harmoniques en fonction d'un critère d'optimisation choisi dans chaque application.

Par ailleurs, le signal de permutation qui est engendré à partir d'informations de commande issues du calculateur peut être délivré directement vers les mémoires, de sorte que les ordres de permutation assurent instantanément les changements de mode lecture/écriture de celles-ci.

Toutefois, pour certaines permutations, le convertisseur peut être le siège à l'instant du changement de configurations, de contraintes électriques préjudiciables, provenant de la nature particulière des commutations mises en oeuvre lors de la permutation considérée. Il est ainsi avantageux de mettre en oeuvre le procédé en délivrant le signal de permutation par l'entremise de moyens auxiliaires de synchronisation en vue de valider les ordres de permutation lorsque le signal d'échantillonnage fournit une adresse déterminée de mémoire. On peut ainsi éliminer les permutations conduisant à des phénomènes de commutation préjudiciables.

L'invention s'étend à un automate de commande rapprochée, se prêtant à une mise en oeuvre du procédé défini précédemment. Cet automate destiné à commander un convertisseur statique en vue de l'alimentation d'une machine électrique, en particulier machine à courant alternatif autopilotée, à partir d'informations de commande (données (D) de commande, adresses (A) de commande correspondantes) et d'informations (C) issues de capteurs ; ledit automate comprend :

- deux mémoires vives identiques pourvues chacune d'une entrée d'adressage (a), d'une entrée/sortie de données (es) et d'une entrée de validation du mode lecture ou écriture (v),
- une unité de génération temporelle d'adresses de lecture, agencée pour recevoir les données de commande (D) et adaptée pour engendrer un premier signal d'échantillonnage (AL$_1$) constitué par une succession d'adresses,
- une unité de permutation de modes, agencée pour recevoir les informations de commande (D, A) et adaptée pour engendrer un signal de permutation (SP, $\overline{SP}$) portant des ordres de permutation, ce signal étant délivré vers les entrées de validation de mode (v) des deux mémoires,
- des moyens d'adressage des mémoires, agencés pour recevoir un signal d'échantillonnage, les adresses de commande (A) et le signal de permutation (SP, $\overline{SP}$) et adaptés pour délivrer des adresses de lecture ou d'écriture (AM$_1$, AM$_2$) sur les entrées d'adressage (a) des deux mémoires,
- des moyens de lecture/écriture, agencés pour recevoir les données de commande (D) et le signal de permutation (SP, $\overline{SP}$), et adaptés pour délivrer les données de commande (D) vers la mémoire en mode écriture et pour lire l'autre mémoire et transmettre en sortie les données contenues dans ladite mémoire (SM).

Selon la présente invention, l'automate comprend, combinés aux moyens précités :

- une unité de conditionnement de signaux, agencée pour recevoir les informations de capteurs (C) et adaptée pour engendrer un second signal d'échantillonnage (AL$_2$) constitué par une succession d'adresses,
- un module de sélection d'adresses, relié à l'unité de génération temporelle et à l'unité de conditionnement, en vue de sélectionner un signal d'échantillonnage (AL) et de délivrer ledit signal d'échantillonnage sélectionné vers les moyens d'adressage des mémoires.

Comme on le comprendra mieux plus loin, un tel automate associé à un calculateur standard permet d'assurer la commande d'alimentation des principaux types de machines électriques (moteurs ou générateurs), et en particulier la commande des machines à courant alternatif autopilotées.

La description qui suit en référence aux dessins annexés présente à titre d'exemples un mode de réalisation d'un tel automate et une variante ; sur ces dessins qui font partie intégrante de la présente description :

- la figure 1 est un schéma fonctionnel de l'automate,
- la figure 2 est un organigramme illustrant le processus général de fonctionnement de l'automate,
- les figures 3a, 3b, 3c, 3d et 3e illustrent les trajets des informations dans l'automate pour différentes phases de fonctionnement,
- les figures 4a et 4b illustrent des phases de fonctionnement spécifiques d'une machine synchrone autopilotée,
- la figure 5 illustre une phase de fonctionnement spécifique d'une machine asynchrone autopilotée,
- la figure 6 illustre une phase de fonctionnement spécifique d'une machine à courant continu ou de machines alternatives alimentées en boucle ouverte (synchrone ou asynchrone),
- la figure 7 illustre la commande directe du convertisseur statique par le calculateur,
- la figure 8 est un schéma fonctionnel d'une variante structurelle d'automate.

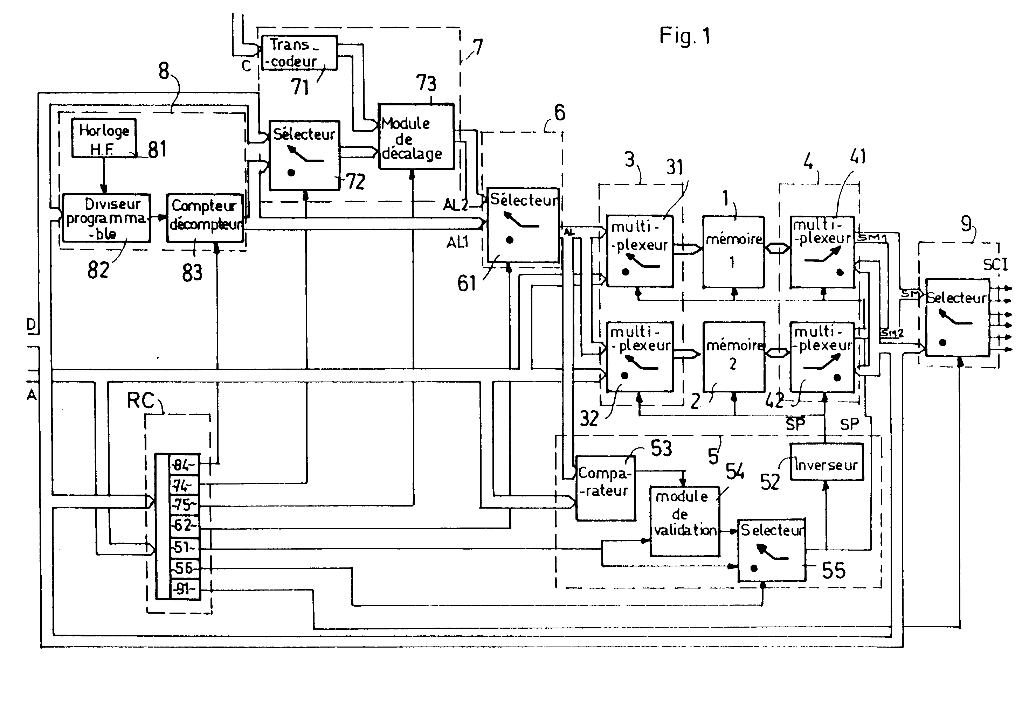

L'automate de commande rapprochée représenté à titre d'exemple à la figure 1 est destiné à délivrer un signal de commande SCI vers un convertisseur statique en vue de l'alimentation d'une machine électrique, en particulier machine autopilotée, par l'intermédiaire de celui-ci. Par exemple, pour une machine alternative triphasée, ce convertisseur peut posséder six interrupteurs, chacun à deux états, ouvert ou fermé, et le signal de commande SCI comprend alors une succession de mots de six bits, chaque mot correspondant à une configuration d'états du convertisseur.

Cet automate est destiné à se connecter en entrée, d'une part, à un calculateur par l'intermédiaire de son bus de données D et de son bus d'adresses A, d'autre part, à un capteur rotorique pour recevoir des informations de position C dans le cas de machines autopilotées.

L'automate comprend essentiellement deux mémoires vives identiques 1 et 2 travaillant en parallèle, des moyens 3 d'adressage de ces mémoires, des moyens 4 de lecture/écriture de celles-ci, une unité 5 de permutation de modes écriture/lecture desdites mémoires, un module 6 de sélection d'adresses, une unité 7 de conditionnement des informations de position C, une unité 8 de génération temporelle d'adresses de lecture, un sélecteur de voie 9 et des moyens de contrôle référencés globalement en RC à la figure 1 et constitués par des registres de contrôle associés à certaines des fonctions précédentes comme on le verra plus loin.

Chaque mémoire vive 1 ou 2 possède une entrée d'adressage -a-, une entrée/sortie de données -es- et une entrée de validation du mode lecture ou écriture -v-. La capacité de chacune de ces mémoires est prévue de façon que celle-ci soit apte à contenir un motif de commande M complet : ce motif de commande (fourni par le calculateur) est constitué par une succession de mots binaires, chaque mot étant représentatif d'une configuration d'états du convertisseur statique (le nombre de bits de chaque mot est égal au nombre d'interrupteurs composant ledit convertisseur). Le nombre de mots fournit le nombre de configurations d'état qu'il est possible de fixer sur une période de fonctionnement de la machine commandée (correspondant généralement à un tour de rotor). Le nombre de mots de chaque motif est ajusté en fonction de la précision désirée de commande. Par exemple, une bonne précision est obtenue en choisissant des motifs ayant entre $2^8$ et $2^{10}$ mots.

L'unité de génération temporelle 8 comprend en l'exemple, en série : une horloge haute fréquence 81, des diviseurs programmables 82, recevant les données de commande D issues du calculateur et un compteur/décompteur 83. Les diviseurs 82 sont adaptés pour engendrer plusieurs fréquences programmées par les données D, notamment une basse fréquence (utilisée dans le cas d'une machine asynchrone autopilotée pour faire varier la fréquence des courants rotoriques) et des fréquences plus élevées (utilisées dans le cas des machines à courants continus afin de faire varier la fréquence de hachage).

Le compteur/décompteur 83 reçoit à chaque instant le signal de sortie des diviseurs 82 et en effectue le comptage ou le décomptage suivant un code binaire modulo $2^n$ (n = 8 dans le cas de 256 configurations d'états). Le sens comptage ou décomptage est fixé par un registre de contrôle référencé en 84 dans les moyens RC déjà évoqué ; le sens de comptage ou décomptage définit le sens de rotation dans le cas des machines asynchrones autopilotées.

Le compteur/décompteur 83 délivre un premier signal d'échantillonnage $AL_1$, dont les valeurs évoluent dans l'exemple précité de 0 à $2^8$-1. Ces valeurs constituent une succession d'adresses, envoyées vers le module 6 de sélection d'adresses et vers l'unité 7 de conditionnement pour servir à l'élaboration d'adresses de lectue.

L'unité de conditionnement 7 comprend en l'exemple un transcodeur 71 recevant les informations de position C issues du capteur, un sélecteur 72 recevant les données D issues du calculateur et le premier signal d'échantillonnage $AL_1$ issu de l'unité 8, et un module de décalage 73 relié à la sortie du sélecteur 72 et à la sortie du transcodeur 71.

Le transcodeur 71 transforme les informations C issues du capteur en un signal codé en binaire naturel lequel est délivré vers le module de décalage 73. Ce transcodeur 71 permet d'adapter les informations rotoriques C, quel que soit leur codage, aux traitements ultérieurs.

Le choix entre les données D et le premier signal d'échantillonnage $AL_1$ est défini au niveau du sélecteur 72 par un registre de contrôle 74 (faisant partie des moyens RC), en fonction du type de machine autopilotée commandée : synchrone ou asynchrone.

Le module de décalage 73 est constitué d'un additionneur/soustracteur binaire qui, pour une machine synchrone autopilotée, permet un réglage de l'angle interne à partir des données D, et pour une machine asynchrone autopilotée, permet de définir le mode de fonctionnement moteur ou générateur de celle-ci. Le choix addition ou soustraction est défini par un autre registre de contrôle 75 des moyens RC.

Le module de décalage 73 délivre ainsi un second signal d'échantillonnage $AL_2$ en décalant le signal codé binaire issue du transcodeur, d'une valeur fournie par les données de commande D ou par le premier signal d'échantillonnage $AL_1$.

Le module de sélection d'adresses 6 est relié à l'unité de génération temporelle 8 et à l'unité de conditionnement 7 en vue de sélectionner un des deux signaux d'échantillonnage $AL_1$ ou $AL_2$ (le signal sélectionné étant référence AL). Ce module comprend un sélecteur à deux voies 61 qui reçoit les deux signaux d'échantillonnage $AL_1$ et $AL_2$, et un registre de contrôle 62 des moyens RC, qui délivre un ordre de choix fonction de l'application.

Dans le cas des machines alternatives à boucle ouverte ou des machines à courant continu, le sélecteur 61 sélectionne sur ordre du registre 62 le premier signal d'échantillonnage $AL_1$ ; dans le cas des machines alternatives autopilotées, le sélecteur sélectionne le second signal d'échantillonnage $AL_2$.

L'unité de permutation 5 comprend un registre de contrôle 51 des moyens RC, associé à un inverseur 52 en vue de délivrer un signal de permutation constitué d'ordres de permutation SP et de leurs complémentaires $\overline{SP}$.

Dans l'exemple décrit, l'unité de permutation comprend en outre des moyens auxiliaires de synchronisation qui permettent de valider les ordres de permutation afin d'éviter, le cas échéant, les commutations dangereuses pour le convertisseur. Ces moyens auxiliaires comprennent un comparateur 53 recevant les adresses de commande A issues du calculateur et le signal d'échantillonnage AL issu du sélecteur 61, un module de validation 54 relié au comparateur 53 et au registre de contrôle 51, et un sélecteur 55 adapté pour sélectionner en sortie le signal de permutation synchronisé issue du module 54 ou le signal de permutation issu directement du registre de contrôle 51.

Le comparateur 53 reçoit de la part du calculateur l'adresse sur laquelle la permutation doit être synchronisée et l'adresse courante de lecture portée par le signal AL. Il délivre un signal logique d'égalité au moment de la coïncidence. Le module de validation 54 valide le signal de permutation issue du registre de contrôle 51 en présence dudit signal d'égalité, de façon à délivrer le signal de permutation synchronisé précité.

Ainsi, lorsque ce signal de permutation synchronisé est sélectionné en sortie du sélecteur 55 (afin de réduire les risques au niveau du convertisseur), l'ordre de permutation SP et son complément $\overline{SP}$ n'existent que pour des adresses correspondant à des commutations non dangereuses. Le choix entre le mode synchronisé (à fiabilité accrue) et le mode standard est fixé par un registre de contrôle 56 des moyens RC.

Les moyens 3 d'adressage des mémoires comprennent, pour chaque mémoire 1 ou 2, un multiplexeur à deux voies 31 ou 32, agencé pour recevoir le signal d'échantillonnage sélectionné AL et les adresses de commande A issues du calculateur.

L'entrée de sélection d'un de ces multiplexeurs 31 reçoit les ordres de permutation SP, cependant que l'entrée de sélection de l'autre multiplexeur 32 reçoit les ordres complémentaires $\overline{SP}$, de façon que soient sélectionnées de façon complémentaire, pour l'un, les adresses AL en vue d'une lecture, pour l'autre, les adresses A en vue d'une écriture. Les mémoires 1 et 2 recoivent elles-mêmes sur leur entrée de validation -v- les ordres SP et $\overline{SP}$ qui les positionnent de façon complémentaire en mode lecture ou écriture.

Les moyens 4 de lecture/écriture comprennent, pour chaque mémoire 1 ou 2, un multiplexeur bidirectionnel à deux voies 41 ou 42, agencé pour recevoir les données D issues du calculateur et connecté par un bus bidirectionnel à l'entrée/sortie de données -es- de la mémoire correspondante 1 ou 2.

L'entrée de sélection de l'un de ces multiplexeurs 41 reçoit les ordres de permutations SP, cependant que l'entrée de sélection de l'autre multiplexeur 42 reçoit les ordres complémentaires $\overline{SP}$ de façon que soient sélectionnées, de façon complémentaire, pour l'un, les données lues dans la mémoire en mode lecture et, pour l'autre, les données D à écrire dans la mémoire en mode écriture.

Le multiplexeur 41 ou 42 associé à la mémoire en mode lecture délivre les données SM lues dans ladite mémoire vers le sélecteur de voie 9. Celui-ci reçoit en outre les données de commande D issues du calculateur et sélectionne l'un de ces ensembles de données pour délivrer le signal de commande SCI.

Un registre de contrôle 91 des moyens RC est associé au sélecteur 9 en vue de délivrer vers celui-ci un signal d'accès fonction de la stratégie de commande.

Il est ainsi possible, pendant des durées transitoires de commande, de déconnecter les sorties des mémoires 1 et 2 par rapport au convertisseur, et de connecter directement ce dernier au calculateur. Ce mode d'intervention directe du calculateur permet une commande extrêmement rapide, utile dans certains cas (ouvertures simultanées de tous les interrupteurs du convertisseur en vue d'un arrêt, forçage de certains modes de fonctionnement...).

Il est à noter que les divers registres des moyens de contrôle RC engendrent leurs signaux de sortie à partir d'instructions appropriées, contenues dans les informations de commande D, A issues du calculateur. Ainsi l'automate ne fait l'objet d'aucune manipulation directe de la part d'un opérateur externe, les informations de commande (fonction du type de machine et des régimes de fonctionnement désirés), étant élaborées de façon centralisée au niveau de l'ordinateur au moyen d'un programme adapté.

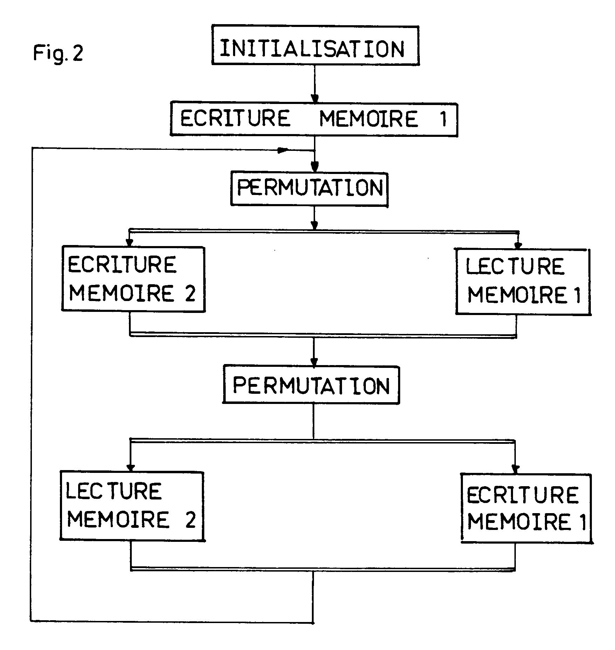

La figure 2 illustre le processus général de fonctionnement de l'automate. Au démarrage, une phase d'initialisation permet de positionner les sélecteurs 61, 72, 55 commandés par les registres de contrôle 62, 74, 51 qui reçoivent des informations de commande nécessaires de la part du calculateur. Cette phase permet de configurer l'automate en fonction du type de machine commandée.

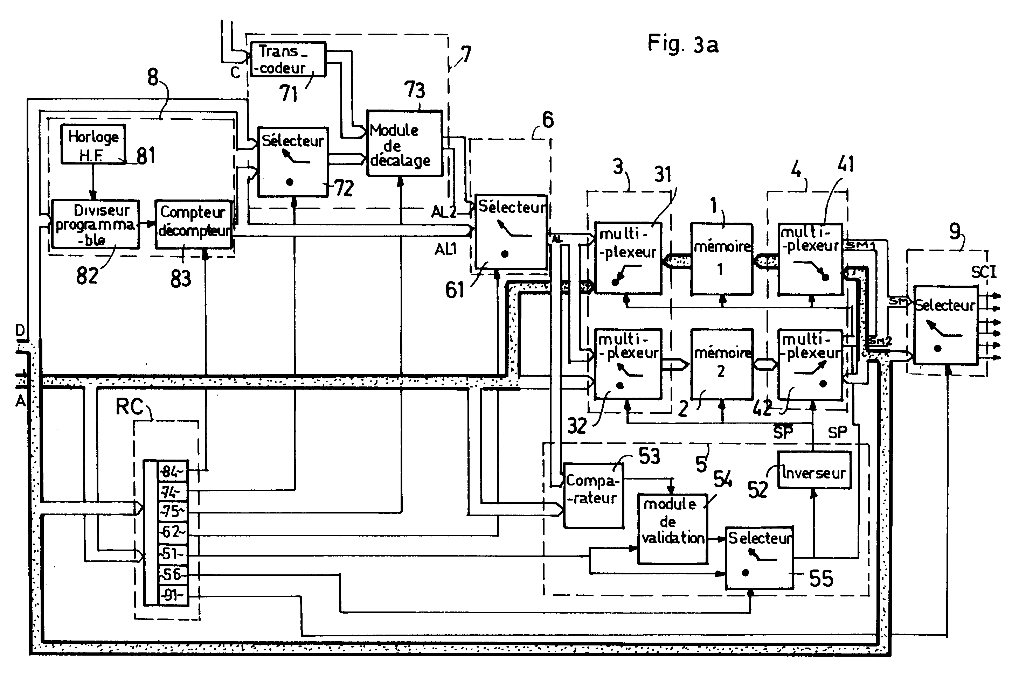

Ensuite, une phase d'écriture seule après initialisation est effectuée dans une des mémoires 1. Le trajet des informations durant cette phase d'écriture est symbolisé à la figure 3a. Un premier motif porté par les informations A, D issues du calculateur, est écrit dans la mémoire 1 : les adresses A transitent par le multiplexeur 31 et les données D par le multiplexeur 41.

Cette phase est immédiatement suivie d'une phase de permutation afin de changer les modes lecture/écriture des deux mémoires : lecture du motif précédemment changé dans la mémoire 1 et simultanément écriture d'un autre motif dans la mémoire 2.

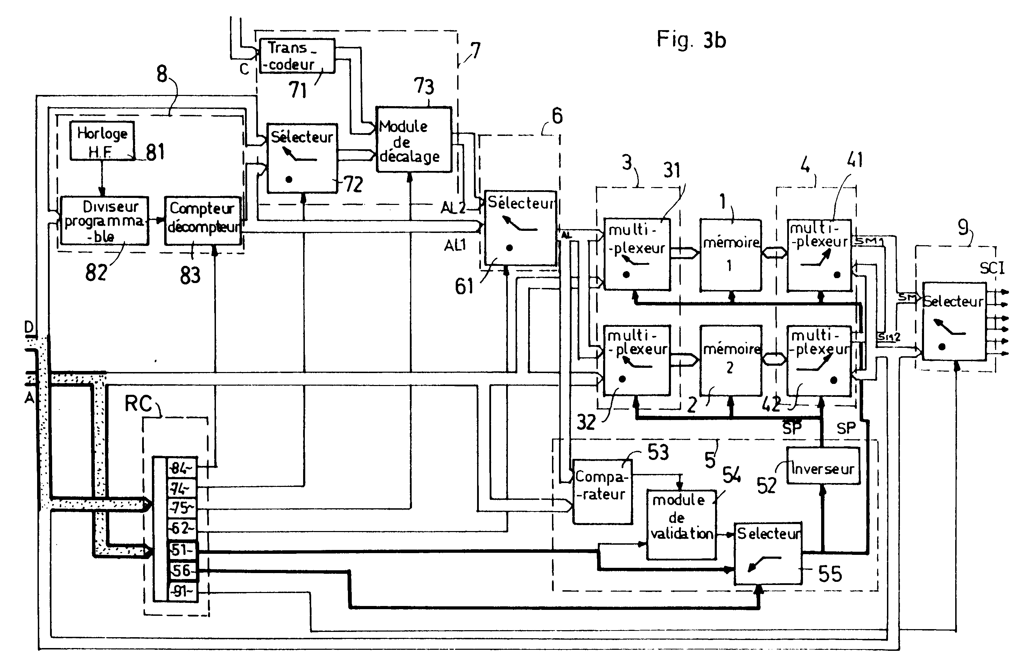

Le trajet des signaux au cours de la phase de permutation est symbolisé à la figure 3b dans le cas d'une permutation directe. Les ordres SP et $\overline{SP}$ du signal de permutation font basculer les multiplexeurs 31, 32 et 41 et 42 et inversent le mode de chaque mémoire 1 et 2. Dans ce cas les ordres de permutation proviennent directement du registre 56 (le registre 51 ayant positionné le sélecteur 55 en mode permutation directe).

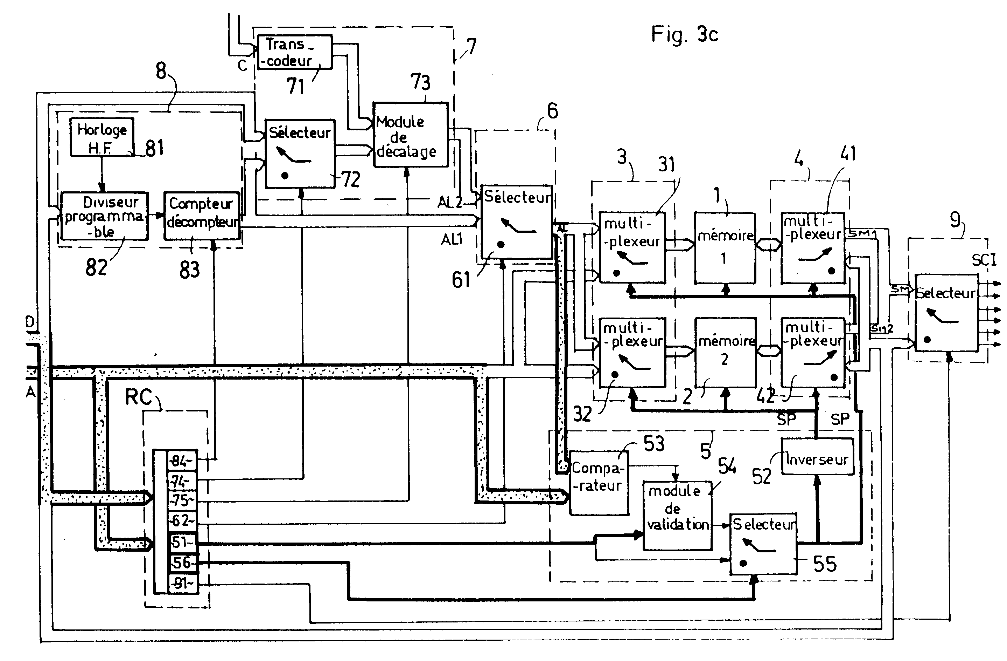

Le trajet des signaux dans le cas d'une permutation synchronisée est symbolisé à la figure 3c. Une adresse de validation fournie par le calculateur est comparée dans le comparateur 53 aux adresses de lecture et la validation des ordres de permutation intervient lors de la coïncidence.

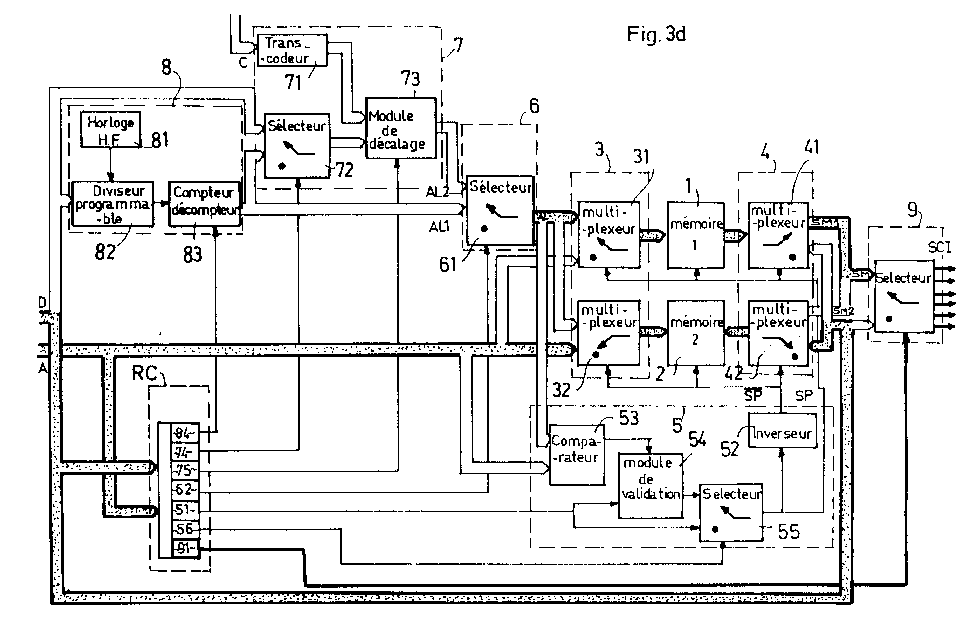

Après permutation, les modes des mémoires sont inversées et l'on rentre dans une phase de lecture de la mémoire 1 et d'écriture d'un autre motif dans la mémoire 2. Cette phase est illustrée à la figure 3d : les adresses de lecture AL assurent la lecture de la mémoire 1 et les adresses de commande A assurent l'écriture des données D dans la mémoire 2. Les informations $SM_1$ lues dans la mémoire 1 sont délivrées vers le convertisseur à travers le sélecteur 9 lequel est positionné de façon appropriée par le registre de contrôle 91.

Cette lecture de la mémoire 1 s'opère de façon cyclique pour délivrer répétitivement le motif continu dans celle-ci. Elle se poursuit jusqu'à l'arrivée d'un ordre de permutation (en vue de changer le régime de fonctionnement).

L'écriture dans la mémoire 2 s'effectue de façon indépendante et asynchrone, au rythme et sous les ordres du calculateur.

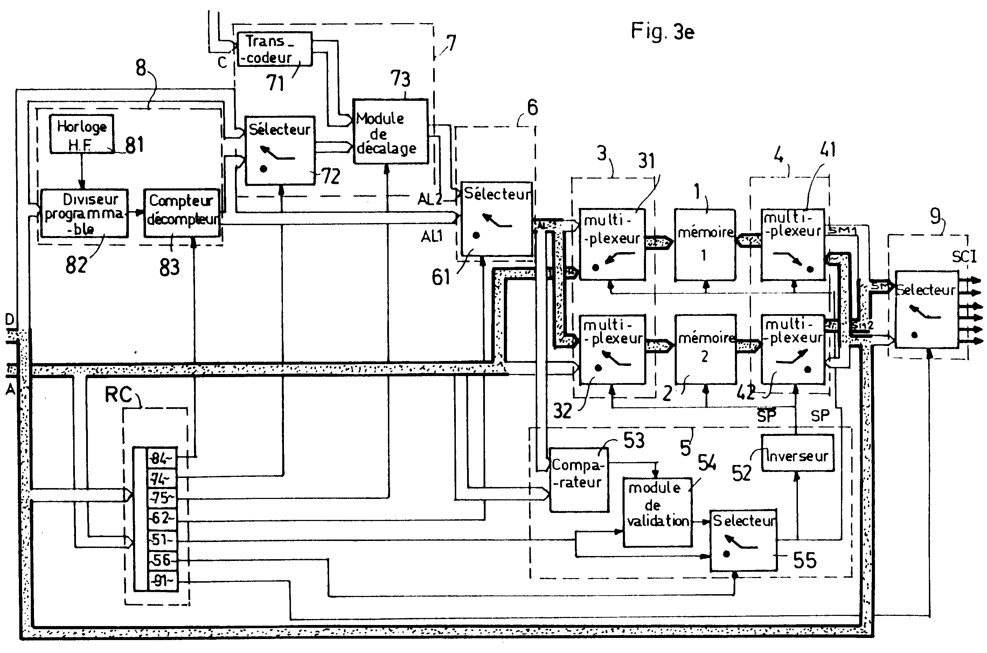

Lorsqu'un nouvel ordre de permutation est engendré par le calculateur, les modes lecture/écriture des mémoires sont inversés et une nouvelle phase d'écriture/lecture intervient. Cette phase est illustrée à la figure 3e : les multiplexeurs ont basculé et, en sortie, le signal SCI est constitué par la succession $SM_2$ du deuxième motif lu dans la mémoire 2.

Le fonctionnement se poursuit ainsi de façon répétitive. Il n'y a aucun risque d'interruption de la commande du convertisseur ou de déconnexion accidentelle.

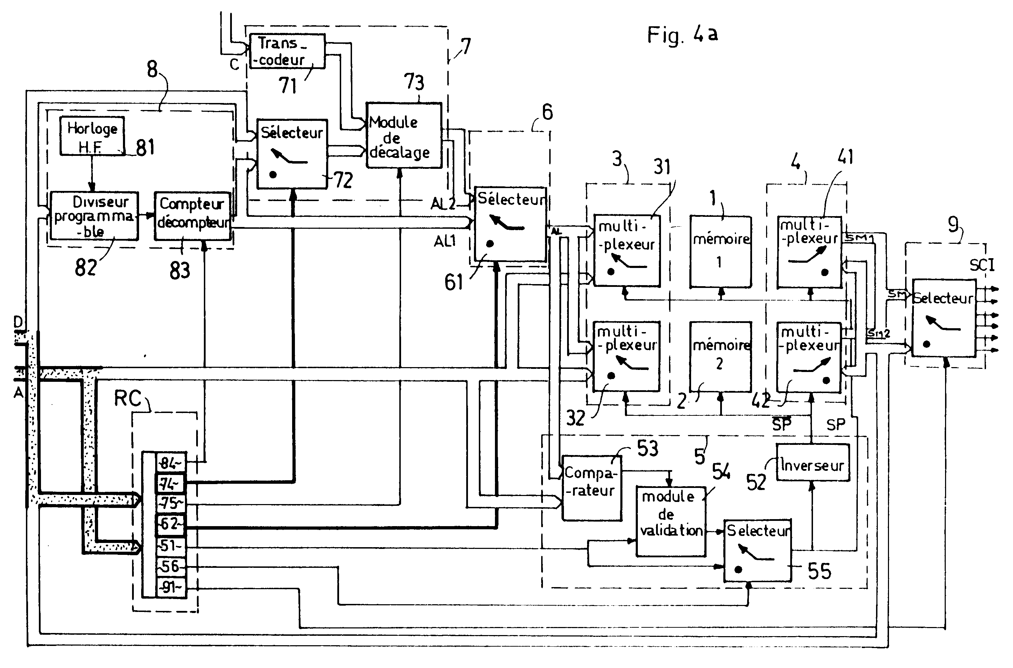

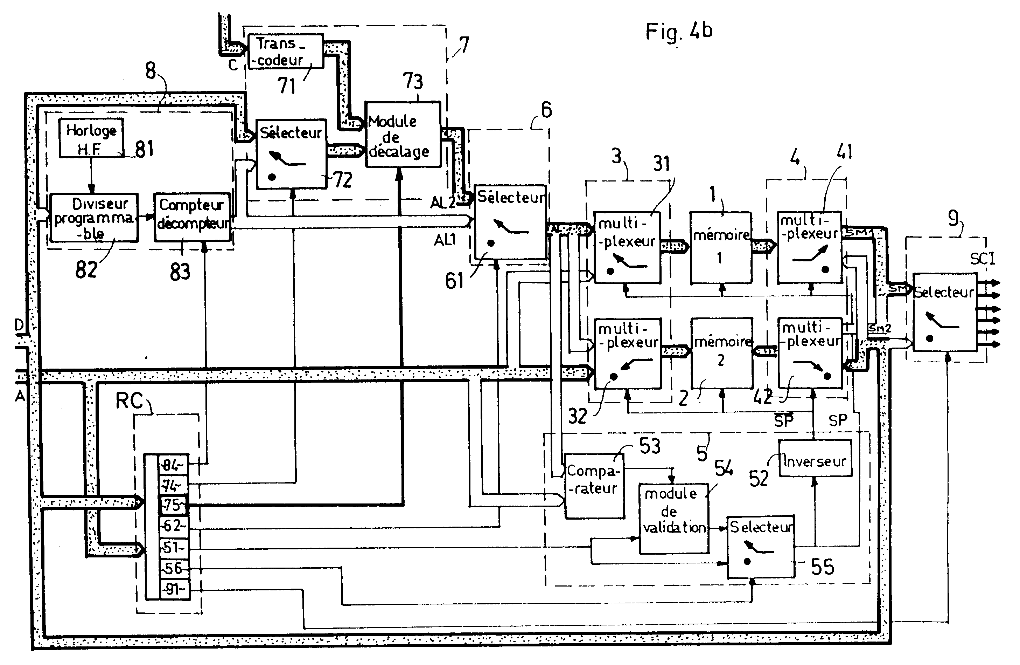

Les figures 4a et 4b illustrent des phases spécifiques de fonctionnement de l'automate pour la commande d'une machine synchrone autopilotée.

La figure 4a montre la phase d'initialisation qui s'opère à partir des registres 74 et 62 sur ordre du calculateur. Le sélecteur 72 est disposé de façon à pouvoir transmettre les données de commande D vers le module de décalage 73. Le sélecteur 61 est disposé par le registre 62 de façon à pouvoir transmettre les adresses $AL_2$ issues de ce module de décalage.

La figure 4b illustre une phase de lecture/écriture dans le cas d'une telle machine synchrone autopilotée, en vue d'assurer un réglage de la tension d'alimentation de ladite machine combinée à un réglage de son angle interne.

Le calculateur fournit au sélecteur 72 des données représentatives de la valeur de l'angle interne à imposer. Le module de décalage 73 reçoit les informations de position C et la valeur de l'angle interne, et opère l'addition ou la soustraction de ces données, le sens du décalage étant fixé par le registre de contrôle 75. Le résultat constitue les adresses AL transmises via le sélecteur 61. La lecture/écriture s'effectue ensuite comme déjà décrit dans le cas général.

Il est à noter qu'une variante de fonctionnement peut consister à effectuer le décalage, non pas au niveau des adresses de lecture, mais au niveau de l'écriture à partir d'un motif de base avec un décalage d'adresses commandé par le calculateur.

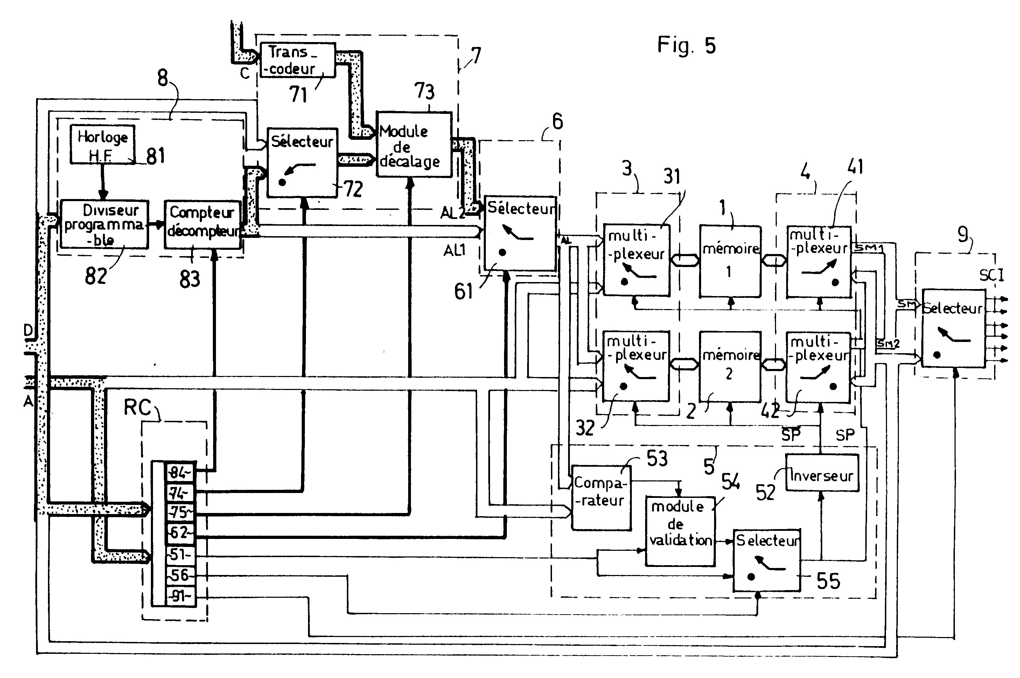

La figure 5 illustre un fonctionnement spécifique à une machine asynchrone autopilotée en vue d'assurer un réglage de la fréquence de ses courants rotoriques.

Dans ce cas, le décalage d'adresses est amené à varier de façon continue dans le temps par l'unité de génération temporelle 8, qui fournit une valeur de décalage fonction de la fréquence des courants rotoriques désirés.

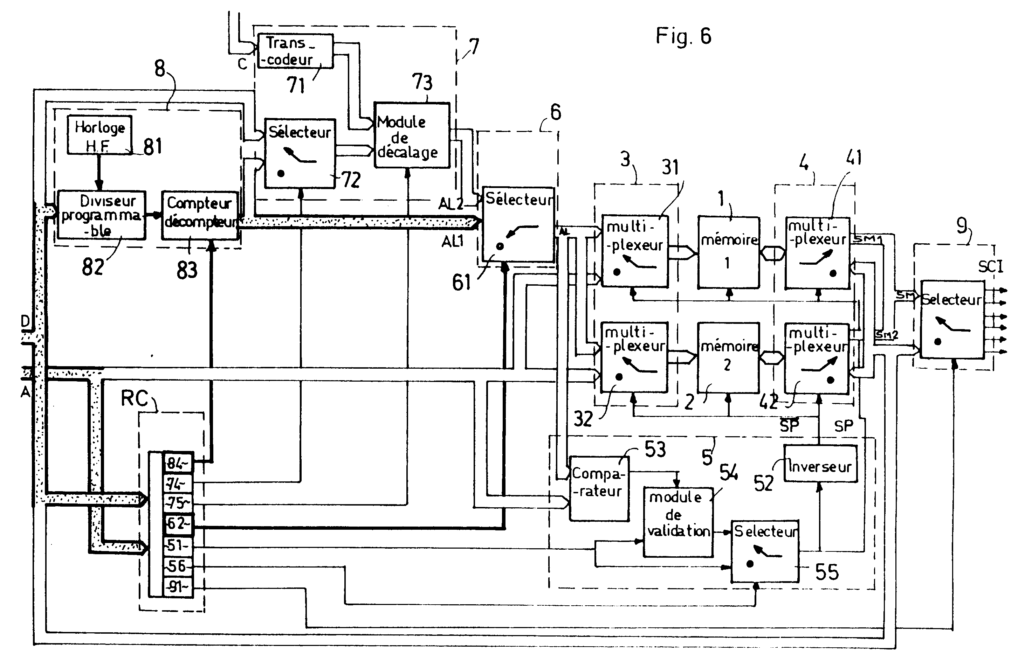

La figure 6 illustre le fonctionnement spécifique soit d'une machine à courant continu en vue de régler la fréquence de hachage de la tension d'alimentation, soit d'une machine à courant alternatif en boucle ouverte en vue d'assurer un réglage de la fréquence d'alimentation. L'unité de génération temporelle 8 est programmée par le calculateur pour engendrer une succession d'adresses $AL_1$ qui est transmise par le sélecteur d'adresses 61.

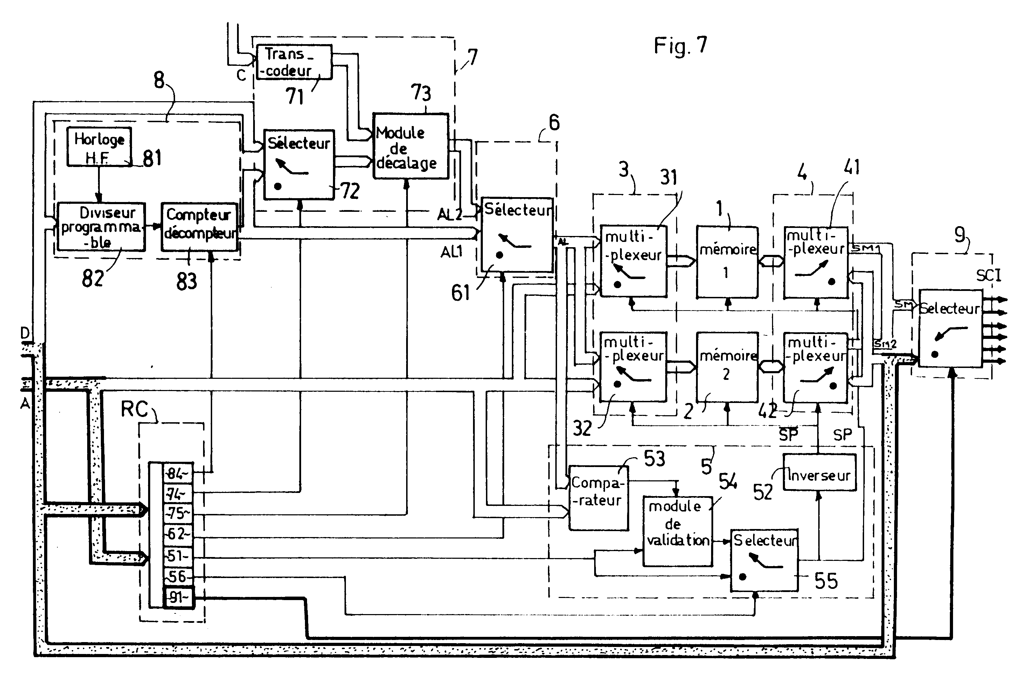

La figure 7 illustre la commande directe du convertisseur par le calculateur pendant certaines durées transitoires de commande ; le sélecteur 9 est alors positionné par le registre de contrôle 91 de façon à recevoir directement les données de commande D.

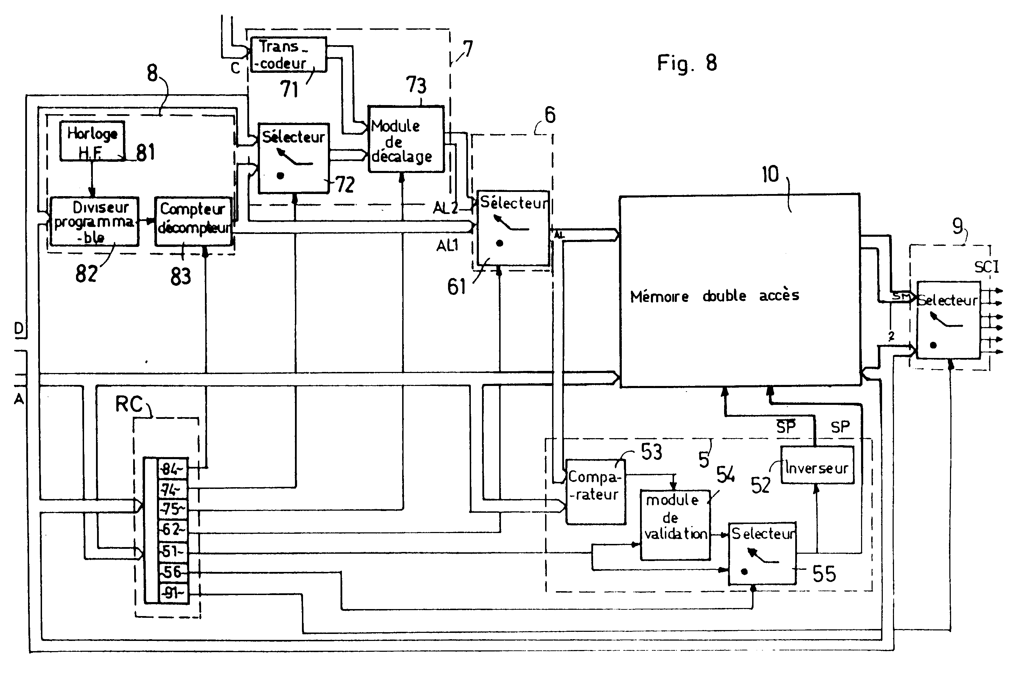

La figure 8 illustre une variante structurelle de l'automate dans laquelle les deux mémoires vives, les moyens d'adressage et les moyens de lecture/écriture sont constitués par une mémoire vive à double accès 10 du type à écriture et lecture simultanées, ladite mémoire étant séparée en deux zones alternativement en mode lecture et écriture. On peut par exemple utiliser une mémoire double accès, ref 7130 de "IDT".

**Revendications**

1. Procédé de commande d'un convertisseur statique composé d'un ensemble d'interrupteurs, chacun à deux états, ouvert ou fermé, ledit procédé étant destiné à engendrer un signal de commande des états desdits interrupteurs (SCI) en vue d'assurer un réglage de l'angle interne d'une machine électrique à courant alternatif autopilotée synchrone pourvue d'un capteur rotorique délivrant des informations de position sous forme numérique, ledit procédé consistant :

   - à utiliser deux mémoires (1, 2), chacune apte à contenir un motif de commande (M) représentatif d'une succession de configuration d'états, chaque configuration étant constituée par des états déterminés de l'ensemble des interrupteurs du convertisseur statique,

   - à engendrer un signal d'échantillonnage (AL), apte à assurer, pour chaque mémoire, une lecture séquentielle du motif de commande, configuration par configuration, ledit signal d'échantillonnage (AL) étant engendré à partir des informations de position issues du capteur rotorique, de façon à comprendre, pour chaque tour de rotor, une succession d'adresses de lecture dans les mémoires,

   - à engendrer un signal de permutation (SP, $\overline{SP}$) portant des ordres de permutation complémentaires des modes lecture/écriture des deux mémoires de sorte que celles-ci restent en permanence en mode différent,

   - dans une phase d'initialisation, à écrire et mémoriser un premier motif de commande dans la mémoire se trouvant en mode écriture, dite première mémoire (1), et sur ordre du signal de permutation (SP, $\overline{SP}$), à permuter les modes des deux mémoires,

   - dans une première phase :

     . à lire de façon répétitive le premier motif de commande contenue dans ladite première mémoire (1) à partir du signal d'échantillonnage (AL) en vue d'engendrer un signal de sortie de première mémoire ($SM_1$), constitué par une répétition du premier motif de commande,

     . à écrire et mémoriser un deuxième motif de commande dans l'autre mémoire, dite seconde mémoire (2), pendant la lecture de la première mémoire (1), lesdits motifs de commande étant écrits dans ladite mémoire à partir de motifs de base, avec un décalage d'adresses commandé par un calculateur de façon que chaque motif écrit corresponde au motif de base avec un décalage des configurations d'état, fonction de l'angle interne désiré.

     . sur ordre du signal de permutation (SP, $\overline{SP}$), à permuter les modes des deux mémoires de façon à mettre la première mémoire en mode écriture en vue de la mémorisation éventuelle d'un nouveau motif de commande, et à mettre la seconde mémoire en mode lecture de façon à lire, de manière répétitive, le deuxième motif de commande à partir du signal d'échantillonnage (AL) en vue d'engendrer un signal de sortie de deuxième mémoire ($SM_2$), constitué par une répétition du deuxième motif de commande,

   - à poursuivre les permutations des deux mémoires sur ordre du signal de permutation, en vue du déroulement de phases successives similaires à la première phase, et à affecter, au cours de chaque phase, la sortie de la mémoire en mode lecture à la commande du convertisseur statique de façon à délivrer vers celui-ci un signal de commande (SCI) constitué par la succession (SM) des signaux de sortie de première mémoire ($SM_1$) et signaux de sortie de deuxième mémoire ($SM_2$).

2. Procédé de commande d'un convertisseur statique composé d'un ensemble d'interrupteurs, chacun à deux états, ouvert ou fermé, ledit procédé étant destiné à engendrer un signal de commande des états desdits interrupteurs (SCI) en vue d'assurer un réglage de l'angle interne d'une machine électrique à courant alternatif autopilotée synchrone pourvue d'un capteur rotorique délivrant des informations de position sous forme numérique, ledit procédé consistant :

- à utiliser deux mémoires (1, 2), chacune apte à contenir un motif de commande (M) représentatif d'une succession de configuration d'états, chaque configuration étant constituée par des états déterminés de l'ensemble des interrupteurs du convertisseur statique,
- à engendrer un signal d'échantillonnage (AL), apte à assurer, pour chaque mémoire, une lecture séquentielle du motif de commande, configuration par configuration, ledit signal d'échantillonnage (AL) étant engendré à partir des informations de position issues du capteur rotorique, de façon à comprendre, pour chaque tour de rotor, une succession d'adresses de lecture dans les mémoires,
- à engendrer un signal de permutation (SP, $\overline{SP}$) portant des ordres de permutation complémentaires des modes lecture/écriture des deux mémoires de sorte que celles-ci restent en permanence en mode différent,
- dans une phase d'initialisation, à écrire et mémoriser un premier motif de commande dans la mémoire se trouvant en mode écriture, dite première mémoire (1), et sur ordre du signal de permutation (SP, $\overline{SP}$), à permuter les modes des deux mémoires,
- dans une première phase :
  . à lire de façon répétitive le premier motif de commande contenue dans ladite première mémoire (1) à partir du signal d'échantillonnage (AL) en vue d'engendrer un signal de sortie de première mémoire (SM₁), constitué par une répétition du premier motif de commande, lesdits motifs de commande étant lus dans ladite mémoire, avec un décalage d'adresses commandé par un calculateur de façon que chaque motif lu corresponde au motif écrit avec un décalage des configurations d'état, fonction de l'angle interne.
  . à écrire et mémoriser un deuxième motif de commande dans l'autre mémoire, dite seconde mémoire (2) pendant la lecture de la première mémoire (1),
  . sur ordre du signal de permutation (SP, $\overline{SP}$), à permuter les modes des deux mémoires de façon à mettre la première mémoire en mode écriture en vue de la mémorisation éventuelle d'un nouveau motif de commande, et à mettre la seconde mémoire en mode lecture de façon à lire, de manière répétitive, le deuxième motif de commande à partir du signal d'échantillonnage (AL) en vue d'engendrer un signal de sortie de deuxième mémoire (SM₂), constitué par une répétition du deuxième motif de commande,
- à poursuivre les permutations des deux mémoires sur ordre du signal de permutation, en vue du déroulement de phases successives similaires à la première phase, et à affecter, au cours de chaque phase, la sortie de la mémoire en mode lecture à la commande du convertisseur statique de façon à délivrer vers celui-ci un signal de commande (SCI) constitué par la succession (SM) des signaux de sortie de première mémoire (SM₁) et signaux de sortie de deuxième mémoire (SM₂).

3. Procédé de commande d'un convertisseur statique composé d'un ensemble d'interrupteurs, chacun à deux états, ouvert ou fermé, ledit procédé étant destiné à engendrer un signal de commande des états desdits interrupteurs (SCI) en vue d'assurer un réglage de l'angle interne d'une machine électrique à courant alternatif autopilotée asynchrone pourvue d'un capteur rotorique délivrant des informations de position sous forme numérique, ledit procédé consistant :
  - à utiliser deux mémoires (1, 2), chacune apte à contenir un motif de commande (M) représentatif d'une succession de configuration d'états, chaque configuration étant constituée par des états déterminés de l'ensemble des interrupteurs du convertisseur statique,
  - à engendrer un signal d'échantillonnage (AL), apte à assurer, pour chaque mémoire, une lecture séquentielle du motif de commande, configuration par configuration, ledit signal d'échantillonnage (AL) étant engendré à partir des informations de position issues du capteur rotorique, de façon à comprendre, pour chaque tour de rotor, une succession d'adresses de lecture dans les mémoires,
  - à engendrer un signal de permutation (SP, $\overline{SP}$) portant des ordres de permutation complémentaires des modes lecture/écriture des deux mémoires de sorte que celles-ci restent en permanence en mode différent,
  - dans une phase d'initialisation, à écrire et mémoriser un premier motif de commande dans la mémoire se trouvant en mode écriture, dite première mémoire (1), et sur ordre du signal de permutation (SP, $\overline{SP}$), à permuter les modes des deux mémoires,

- dans une première phase :
    - à lire de façon répétitive le premier motif de commande contenue dans ladite première mémoire (1) à partir du signal d'échantillonnage (AL) en vue d'engendrer un signal de sortie de première mémoire ($SM_1$), constitué par une répétition du premier motif de commande, lesdits motifs de commande étant lus dans les mémoires, avec un décalage d'adresses amené à varier de façon continue dans le temps, de façon que chaque motif lu corresponde au motif écrit avec un décalage des configurations d'état, fonction de la fréquence des courants rotoriques désirée,
    - à écrire et mémoriser un deuxième motif de commande dans l'autre mémoire, dite seconde mémoire (2), pendant la lecture de la première mémoire (1),
    - sur ordre du signal de permutation (SP, $\overline{SP}$), à permuter les modes des deux mémoires de façon à mettre la première mémoire en mode écriture en vue de la mémorisation éventuelle d'un nouveau motif de commande, et à mettre la seconde mémoire en mode lecture de façon à lire, de manière répétitive, le deuxième motif de commande à partir du signal d'échantillonnage (AL) en vue d'engendrer un signal de sortie de deuxième mémoire ($SM_2$), constitué par une répétition du deuxième motif de commande,
- à poursuivre les permutations des deux mémoires sur ordre du signal de permutation, en vue du déroulement de phases successives similaires à la première phase, et à affecter, au cours de chaque phase, la sortie de la mémoire en mode lecture à la commande du convertisseur statique de façon à délivrer vers celui-ci un signal de commande (SCI) constitué par la succession (SM) des signaux de sortie de première mémoire ($SM_1$) et signaux de sortie de deuxième mémoire ($SM_2$).

4. Procédé selon l'une des revendications 1, 2 ou 3, caractérisé en ce que le signal de permutation (SP, $\overline{SP}$), engendré à partir d'informations de commande issues d'un calculateur, est délivré par l'entremise de moyens auxiliaires de synchronisation en vue de valider les ordres de permutation lorsque le signal d'échantillonnage fournit une adresse déterminée de mémoire.

5. Procédé selon l'une des revendications 1 à 4, dans lequel les motifs de commande sont engendrés par un calculateur, caractérisé en ce que, pendant des durées transitoires de commande, on déconnecte les sorties des mémoires par rapport au convertisseur et on connecte directement celui-ci au calculateur délivrant les motifs de commande.

6. Automate de commande rapprochée, destiné à commander un convertisseur statique en vue notamment de l'alimentation d'une machine électrique, à partir d'informations de commande (données de commande D, adresses de commande correspondantes (A) et d'informations (C) issues de capteurs, ledit automate comprenant :
    - deux mémoires vives identiques (1, 2) pourvues chacune d'une entrée d'adressage (a), d'une entrée/sortie de données (es) et d'une entrée de validation du mode lecture ou écriture (v),
    - une unité (8) de génération temporelle d'adresses de lecture, agencée pour recevoir les données de commande (D) et adaptée pour engendrer un premier signal d'échantillonnage ($AL_1$) constitué par une succession d'adresses,
    - une unité (5) de permutation de modes, agencée pour recevoir les informations de commande (D, A) et adaptée pour engendrer un signal de permutation (SP, SP) portant des ordres de permutation, ce signal étant délivré vers les entrées de validation de mode (v) des deux mémoires (1, 2),
    - des moyens (3) d'adressage des mémoires, agencés pour recevoir un signal d'échantillonnage, les adresses de commande (A) et le signal de permutation (SP, SP) et adaptés pour délivrer des adresses de lecture ou d'écriture ($AM_1$, $AM_2$) sur les entrées d'adressage (a) des deux mémoires (1, 2),
    - des moyens (4) de lecture/écriture, agencés pour recevoir les données de commande (D) et le signal de permutation (SP, SP), et adaptés pour délivrer les données de commande (D) vers la mémoire en mode écriture et pour lire l'autre mémoire et transmettre en sortie les données contenues dans ladite mémoire (SM).

ledit automate étant caractérisé en ce qu'il comprend :

- une unité (7) de conditionnement de signaux, agencée pour recevoir les informations de capteurs (C) et adaptée pour engendrer un second signal d'échantillonnage ($AL_2$) constitué par une succession d'adresses,

- un module (6) de sélection d'adresses, relié à l'unité de génération temporelle (8) et à l'unité de conditionnement (7), en vue de sélectionner un signal d'échantillonnage (AL) et de délivrer ledit signal d'échantillonnage sélectionné vers les moyens (3) d'adressage des mémoires.

7. Automate de commande selon la revendication 6, caractérisé en ce que l'unité (7) de conditionnement comprend un transcodeur (71) adapté pour engendrer un signal codé en binaire naturel à partir des informations de capteurs (C), en vue de la génération du second signal d'échantillonnage ($AL_2$).

8. Automate de commande selon la revendication 7, caractérisé en ce que l'unité (7) de conditionnement comprend un sélecteur (72) agencé pour recevoir les données de commande (D) et le premier signal d'échantillonnage ($AL_1$), et un module de décalage (73) relié à la sortie du sélecteur (72) et à la sortie du transcodeur (71), et adapté pour délivrer le second signal d'échantillonnage ($AL_2$) par un décalage du signal codé binaire issu du transcodeur, d'une valeur fournie par les données de commande (D) ou le premier signal d'échantillonnage ($AL_1$).

9. Automate de commande selon l'une des revendications 6, 7 ou 8, caractérisé en ce que le module (6) de sélection d'adresses comprend :

. un registre de contrôle (62) agencé pour recevoir les informations de commande (D, A) et adapté pour délivrer un ordre de choix fonction de l'application,

. et un sélecteur à deux voies (61), agencé pour recevoir le premier et le second signal d'échantillonnage ($AL_1$, $AL_2$) et adapté pour sélectionner en sortie l'un desdits signaux en fonction de l'ordre de choix issu du registre de contrôle (62).

10. Automate de commande selon l'une des revendications 6, 7, 8 ou 9, caractérisé en ce que l'unité (5) de permutation de modes comprend un registre de contrôle (51) associé à un inverseur (52), agencés pour recevoir les informations de commande (D, A) et adaptés pour délivrer un signal de permutation (SP, SP) fonction de la stratégie de commande, avec des ordres de permutations et leurs complémentaires.

11. Automate de commande selon la revendication 10, caractérisé en ce que l'unité (5) de permutation de modes comprend des moyens auxiliaires de synchronisation composés :

. d'un comparateur (53) agencé pour recevoir les adresses de commande (A) et le signal d'échantillonnage sélectionné (AL) et adapté pour délivrer un signal d'égalité,

. d'un module de validation (54) adapté pour valider le signal de permutation issu du registre de contrôle (51) en présence d'un signal d'égalité et délivrer un signal de permutation synchronisé,

. et d'un sélecteur (55) adapté pour sélectionner en sortie le signal de permutation synchronisé ou le signal de permutation issu du registre de contrôle.

12. Automate de commande selon l'une des revendications 6, 7, 8, 9, 10 ou 11, caractérisé en ce que les deux mémoires vives, les moyens d'adressage et les moyens de lecture/écriture sont constitués par une mémoire vive à double accès (10) du type à écriture et lecture simultanées, ladite mémoire étant séparée en deux zones alternativement en mode lecture et écriture.

13. Automate de commande selon l'une des revendications 6, 7, 8, 9, 10, 11 ou 12, caractérisé en ce qu'il comprend :

. un registre de contrôle (91) agencé pour recevoir les informations de commande (D, A) et adapté pour délivrer un signal d'accès fonction de la stratégie de commande,

. en sortie des moyens (4) de lecture/écriture, un sélecteur de voie (9) agencé pour recevoir, d'une part, les données (SM) lues dans la mémoire en mode lecture, d'autre part, les données de commande (D) et adapté pour sélectionner l'un de ces ensembles de données en fonction du signal d'accès issu du registre de contrôle (91).

## Claims

1. Process for controlling a static converter composed of an arrangement of switches, each of them having two states, open or closed, said process being intended to generate a signal for controlling the states of said switches (SCI) with a view to ensuring regulation of the interior angle of a synchronous self-regulated electric machine for alternating current provided with a rotor-type pickup supplying position data in numerical form, whereby said process consists :

- in making use of two memories (1, 2), each of them so designed as to contain a control sequence (M) which is representative of a series of state configurations, each configuration consisting in states determined by the arrangement of switches of the static converter,

- in generating a sampling signal (AL), capable of ensuring, for each memory, sequential reading, configuration by configuration, of the control sequence, said sampling signal (AL) being generated from the position data delivered by the rotor-type pickup, so as to comprise, for each revolution of the rotor, a succession of read-addresses in the memories,

- in generating a permutation signal (SP, $\overline{SP}$) bearing complementary permutation orders for the read/write modes of the two memories, so that the latter remain permanently in different mode,

- in writing and storing, in an initialisation phase, a first control sequence in the memory which happens to be in the writing mode, the so-called first memory (1), and, in permuting, at the order of the permutation signal (SP, $\overline{SP}$), the modes of the two memories,

- in a first phase :

. in reading in repetitive fashion the first control sequence contained in said first memory (1) from the sampling signal (AL) with a view to generating an output signal of the first memory (SM$_1$), consisting in a repetition of the first control sequence,

. in writing and storing a second control sequence in the other memory, the so-called second memory (2) while the first memory (1) is being read, said control sequences being written in said memory on the basis of base sequences, with an address shift controlled by a computer so that each written sequence corresponds to the base sequence with a shift of the state configurations, in accordance with the required interior angle,

. in permuting, at the order of the permutation signal (SP, $\overline{SP}$), the modes of the two memories so as to put the first memory into the writing mode with a view to possible storage of a new control sequence, and in putting the second memory into the reading mode so as to read, in repetitive manner, the second control sequence from the sampling signal (AL), with a view to generating an output signal of the second memory (SM$_2$), consisting in a repetition of the second control sequence,

- in continuing with the permutations of the two memories at the order of the permutation signal, with a view to running successive phases similar to the first phase, and in assigning, in the course of each phase, the output of the memory in the reading mode to the control of the static converter so as to deliver to the latter a control signal (SCI) consisting in the succession (SN) of the output signals of the first memory (SM$_1$) and output signals of the second memory (SM$_2$).

2. Process for controlling a static converter composed of an arrangement of switches, each of them having two states, open or closed, said process being intended to generate a signal for controlling the states of said switches (SCI) with a view to ensuring regulation of the interior angle of a synchronous self-regulated electric machine for alternating current provided with a rotor-type pickup supplying position data in numerical form, whereby said process consists :

- in making use of two memories (1, 2), each of them so designed as to contain a control sequence (M) which is representative of a series of state configurations, each configuration consisting in states determined by the arrangement of switches of the static converter,

- in generating a sampling signal (AL), capable of ensuring, for each memory, sequential reading, configuration by configuration, of the control sequence, said sampling signal (AL) being generated from the position data delivered by the rotor-type pickup, so as to comprise, for each revolution of the rotor, a succession of read-addresses in the memories,

- in generating a permutation signal (SP, $\overline{SP}$) bearing complementary permutation orders for the read/write modes of the two memories, so that the latter remain permanently in different mode,

- in writing and storing, in an initialisation phase, a first control sequence in the memory which happens to be in the writing mode, the so-called first memory (1), and, in permuting, at the order of the permutation signal (SP, $\overline{SP}$), the modes of the two memories,
- in a first phase :
  . in reading in repetitive manner the first control sequence contained in said first memory (1) from the sampling signal (AL) with a view to generating an output signal of the first memory ($SM_1$), consisting in a repetition of the first control sequence, said control sequences being read in said memory, with an address shift controlled by a computer so that each sequence read corresponds to the sequence written with a shift in the state configurations, according to the interior angle,
  . in writing and storing a second control sequence in the other memory, the so-called second memory (2), while the first memory (1) is being read,
  . in permuting, at the order of the permutation signal (SP, $\overline{SP}$), the modes of the two memories so as to put the first memory into the writing mode with a view to possible storage of a new control sequence, and in putting the second memory into the reading mode so as to read, in repetitive manner, the second control sequence from the sampling signal (AL), with a view to generating an output signal of the second memory ($SM_2$), consisting in a repetition of the second control sequence,
- in continuing with the permutations of the two memories at the order of the permutation signal, with a view to running successive phases similar to the first phase, and in assigning, in the course of each phase, the output of the memory in the reading mode to the control of the static converter so as to deliver to the latter a control signal (SCI) consisting in the succession (SM) of the output signals of the first memory ($SM_1$) and output signals of the second memory ($SM_2$).

3. Process for controlling a static converter composed of an arrangement of switches, each of them having two states, open or closed, said process being intended to generate a signal for controlling the states of said switches (SCI) with a view to ensuring regulation of the interior angle of an asynchronous self-regulated electric machine for alternating current provided with a rotor-type pickup supplying position data in numerical form, whereby said process consists :
- in making use of two memories (1, 2), each of them so designed as to contain a control sequence (M) which is representative of a series of state configurations, each configuration consisting in states determined by the arrangement of switches of the static converter,
- in generating a sampling signal (AL), capable of ensuring, for each memory, sequential reading, configuration by configuration, of the control sequence, said sampling signal (AL) being generated from the position data delivered by the rotor-type pickup, so as to comprise, for each revolution of the rotor, a succession of read-addresses in the memories,
- in generating a permutation signal (SP, $\overline{SP}$) bearing complementary permutation orders for the read/write modes of the two memories, so that the latter remain permanently in different mode,
- in writing and storing, in an initialisation phase, a first control sequence in the memory which happens to be in the writing mode, the so-called first memory (1), and, in permuting, at the order of the permutation signal (SP, $\overline{SP}$), the modes of the two memories,
- in a first phase :
  . in reading in repetitive manner the first control sequence contained in said first memory (1) from the sampling signal (AL) with a view to generating an output signal of the first memory ($SM_1$), consisting in a repetition of the first control sequence, said control sequences being read in the memories, with an address shift caused to vary continuously in time so that each sequence read corresponds to the sequence written with a shift of the state configuration, in accordance with the required frequency of the rotor currents,
  . in writing and storing a second control sequence in the other memory, the so-called second memory (2), while the first memory (1) is being read,
  . in permuting, at the order of the permutation signal (SP, $\overline{SP}$), the modes of the two memories so as to put the first memory into the writing mode with a view to possible storage of a new control sequence, and in putting the second memory into the reading mode so as to read, in repetitive manner, the second control sequence from the sampling signal (AL), with a view to generating an output signal of the second memory ($SM_2$), consisting in a repetition of the second control sequence,

- in continuing with the permutations of the two memories at the order of the permutation signal, with a view to running successive phases similar to the first phase, and in assigning, in the course of each phase, the output of the memory in the reading mode to the control of the static converter so as to deliver to the latter a control signal (SCI) consisting in the succession (SM) of the output signals of the first memory ($SM_1$) and output signals of the second memory ($SM_2$).

4. Process according to one of claims 1, 2 or 3, characterised in that the permutation signal (SP, $\overline{SP}$), generated on the basis of control signals delivered by a computer, is delivered via auxiliary synchronisation means with a view to validating the permutation orders when the sampling signal provides a given memory address.

5. Process according to one of claims 1 to 4, in which the control sequences are generated by a computer, characterised in that one disconnects, during transitional control periods, the outputs of the memories in relation to the converter and connects the latter directly to the computer delivering the control sequences.

6. Automatic system for close control, for controlling a static converter, in particular with a view to supplying an electric machine, on the basis of control information (control data (D), corresponding control addresses (A) and data (C)) delivered by pickups, whereby said automatic system comprises :
- two identical operational memories (1, 2), each provided with an addressing input (a), a data input/output (es) and a validation input for the reading or writing mode (v),
- a unit (8) for time-related generation of reading addresses, so designed as to receive the control data (D) and capable of generating a first sampling signal (AL,) consisting in a succession of addresses,
- a mode permutation unit (5), so designed as to receive the control data (D, A) and capable of generating a permutation signal (SP, $\overline{SP}$) bearing permutation orders, said signal being delivered to the mode validation inputs (v) of the two memories (1,2),
- means (3) for addressing memories, so designed as to receive a sampling signal, the control addresses (A) and a permutation signal (SP, $\overline{SP}$) and capable of delivering reading or writing addresses ($AM_1$, $AM_2$) at the addressing inputs (a) of the two memories (1, 2),
- read/write means (4), so designed as to receive the control data (D) and the permutation signal (SP, $\overline{SP}$) and capable of delivering the control data (D) to the memory in writing mode and of reading the other memory and transmitting at the output stage the data contained in said memory (SM),
said automatic system being characterised in that it comprises :
- a signal conditioning unit (7), so designed as to receive the data from pickups (C) and capable of generating a second sampling signal ($AL_2$) consisting in a succession of addresses,
- an address selection module (6), linked with the unit for time-related generation (8) and the conditioning unit (7), with a view to selecting a sampling signal (AL) and delivering said selected sampling signal to the memory addressing means (3).

7. Automatic control system according to claim 6, characterised in that the conditioning unit (7) comprises a transcoder (71) capable of generating an unmodified signal encoded in binary form on the basis of pickup data (C), with a view to generating the second sampling signal ($AL_2$).

8. Automatic control system according to claim 7, characterised in that the conditioning unit (7) comprises a selector (72) so designed as to receive the control data (D) and the first sampling signal ($AL_1$) as well as a shift module (73) connected with the output of selector (72) and the output of transcoder (71), and capable of delivering the second sampling signal ($AL_2$) by shifting the encoded binary signal from the transcoder by a value provided by the control data (D) or the first sampling signal ($AL_1$).

9. Automatic control system according to one of claims 6, 7 or 8, characterised in that the

14

address selection module (6) comprises :

. a verification register (62) so designed as to receive the control data (D, A) and capable of delivering a selection order in accordance with the application,

. and a two-channel selector (61), so designed as to receive the first and the second sampling signals (AL$_1$, AL$_2$) and capable of selecting at the output stage one of said signals in accordance with the selection order supplied by the verification register (62).

10. Automatic control system according to one of claims 6, 7, 8 or 9, characterised in that the mode permutation unit (5) comprises a verification register (51) associated with an inverter (52), these being so designed as to receive the control data (D, A) and capable of delivering a permutation signal (SP, $\overline{SP}$) in accordance with the control strategy, said signal bearing permutation orders and their complementary orders.

11. Automatic control system according to claim 10, characterised in that the mode permutation unit (5) comprises auxiliary synchronisation means consisting in :

. a comparator (53) so designed as to receive the control addresses (A) and the selected sampling signal (AL) and capable of delivering a signal of equality,

. a validation module (54) capable of validating the permutation signal from the verification register (51) in the presence of a signal of equality and delivering a synchronised permutation signal,

. and a selector (55) capable of selecting at the output stage the synchronised permutation signal or the permutation signal from the verification register.

12. Automatic control system according to one of claims 6, 7, 8, 9, 10 or 11, characterised in that the two operational memories, the addressing means and the read/write means consist in a double-access operational memory (10) of the type with simultaneous writing and reading, said memory being divided into two zones alternatively in reading and writing mode.

13. Automatic control system according to one of claims 6, 7, 8, 9, 10, 11 or 12, characterised in that it comprises :

. a verification register (91) so designed as to receive the control data (D, A) and capable of delivering an access signal in accordance with the control strategy,

. at the output stage read/write means (4), a channel selector (9) so designed as to receive, on the one hand, the data (SM) read during the reading mode, in the memory, and on the other hand the control data (D), and designed to select one of these data groups in accordance with the access signal from the verification register (91).

**Patentansprüche**

1. Verfahren zur Steuerung eines statischen Umformers, bestehend aus einer Gruppe von Schaltern, von denen jeder zwei Zustände, offen oder geschlossen, hat, während das besagte Verfahren die Aufgabe hat, ein Signal zur Steuerung der Zustände der besagten Schalter (SCI) zu erzeugen, um Regelung des Innenwinkels einer synchronen selbstgesteuerten elektrischen Wechselstrommaschine mit einem Rotor-Geber zu bewirken, wobei der besagte Geber Lageinformationen in numerischer Folge liefert, und zwar besteht das besagte Verfahren darin :

- daß von zwei Speichern (1, 2) Gebrauch gemacht wird, von denen jeder so beschaffen ist, daß er eine für eine Reihe von Zustandskonfigurationen repräsentative Steuerfolge (M) enthält, wobei sich jede Konfiguration aus durch die Gesamtheit der Schalter des statischen Umformers bestimmten Zuständen zusammensetzt,

- daß ein Abtastsignal (AL) erzeugt wird, das in der Lage ist, für jeden Speicher sequentielles Lesen der Steuerfolge, von Konfiguration zu Konfiguration, zu gewährleisten, wobei das besagte Abtastsignal (AL) aufgrund der von dem Rotor-Geber gelieferten Lageinformationen erzeugt wird, um, für jede Umdrehung des Rotors, eine Reihe von Leseadressen in den Speichern zu erfassen,

- daß ein Permutationssignal (SP, $\overline{SP}$) erzeugt wird, welches komplementäre Permutationsbefehle der Betriebsarten Lesen/Schreiben der beiden Speicher umfaßt, so daß diese dauernd in verschiedener Betriebsart verbleiben,

- daß in einer Initialisierphase eine erste Steuerfolge in dem in der Betriebsart Schreiben befindlichen Speicher, dem sogenannten ersten Speicher (1), geschrieben und gespeichert wird, und daß auf Anweisung des Permutationssignals (SP, $\overline{SP}$) die Betriebsarten der beiden Speicher permutiert werden,

- daß in einer ersten Phase :

. die erste in dem besagten ersten Speicher (1) enthaltene Steuerfolge auf sich wiederholende Weise von dem Abtastsignal (AL) an gelesen wird, um ein Ausgangssignal des ersten Speichers $(SM_1)$ zu erzeugen, das in einer Wiederholung der ersten Steuerfolge besteht,

. während des Lesens des ersten Speichers (1) in dem anderen Speicher, dem sogenannten zweiten Speicher (2), eine zweite Steuerfolge geschrieben und gespeichert wird, wobei die besagten Steuerfolgen in dem besagten Speicher von Grundfolgen an geschrieben werden, und zwar unter einer Adressenverschiebung, die durch einen Rechner so gesteuert wird, daß jede geschriebene Folge einer Grundfolge mit Verschiebung der Zustandskonfigurationen in Abhängigkeit von dem gewünschten Innenwinkel entspricht,

. auf Anweisung des Permutationssignals (SP, $\overline{SP}$) die Betriebsarten der beiden Speicher so permutiert werden, daß der erste Speicher mit Hinblick auf die eventuelle Speicherung einer neuen Steuerfolge in die Betriebsart Schreiben und der zweite Speicher in die Betriebsart Lesen versetzt wird, so daß er auf sich wiederholende Weise die zweite Steuerfolge von dem Abtastsignal (AL) an liest, um ein Ausgangssignal des zweiten Speichers $(SM_2)$ zu erzeugen, das in einer Wiederholung der zweiten Steuerfolge besteht,

- daß die Permutationen der beiden Speicher auf Anweisung des Permutationssignals fortgesetzt werden, um die Abwicklung aufeinanderfolgender der ersten Phase ähnlicher Phasen zu bewirken und im Laufe jeder Phase den Ausgang des Speichers in der Betriebsart Lesen der Steuerung des statischen Umformers zuzuweisen, so daß diesem ein Steuersignal (SCI) geliefert wird, das in der Folge (SM) der Ausgangssignale des ersten Speichers $(SM_1)$ und der Ausgangssignale des zweiten Speichers $(SM_2)$ besteht.

2. Verfahren zur Steuerung eines statischen Umformers, bestehend aus einer Gruppe von Schaltern, von denen jeder zwei Zustände, offen oder geschlossen, hat, wobei das besagte Verfahren die Aufgabe hat, ein Signal zur Steuerung der Zustände der besagten Schalter (SCI) zu erzeugen, um Regelung des Innenwinkels einer synchronen selbstgesteuerten elektrischen Wechselstrommaschine mit einem Rotor-Geber zu bewirken, wobei der besagte Geber Lageinformationen in numerischer Folge liefert, und zwar besteht das besagte Verfahren darin :

- daß von zwei Speichern (1, 2) Gebrauch gemacht wird, von denen jeder so beschaffen ist, daß er eine für eine Reihe von Zustandskonfigurationen repräsentative Steuerfolge (M) enthält, wobei sich jede Konfiguration aus durch die Gesamtheit der Schalter des statischen Umformers bestimmten Zuständen zusammensetzt,

- daß ein Abtastsignal (AL) erzeugt wird, das in der Lage ist, für jeden Speicher sequentielles Lesen der Steuerfolge, von Konfiguration zu Konfiguration, zu gewährleisten, wobei das besagte Abtastsignal (AL) aufgrund der von dem Rotor-Geber gelieferten Lageinformationen erzeugt wird, um, für jede Umdrehung des Rotors, eine Reihe von Leseadressen in den Speichern zu erfassen,

- daß ein Permutationssignal (SP, $\overline{SP}$) erzeugt wird, welches komplementäre Permutationsbefehle der Betriebsarten Lesen/Schreiben der beiden Speicher umfaßt, so daß diese dauernd in verschiedener Betriebsart verbleiben,

- daß in einer Initialisierphase eine erste Steuerfolge in dem in der Betriebsart Schreiben befindlichen Speicher, dem sogenannten ersten Speicher (1) geschrieben und gespeichert wird, und daß auf Anweisung des Permutationssignals (SP, $\overline{SP}$) die Betriebsarten der beiden Speicher permutiert werden,

- daß in einer ersten Phase :

. das erste in dem besagten ersten Speicher (1) enthaltene Steuermotiv auf sich wiederholende Weise von dem Abtastsignal (AL) an gelesen wird, um ein Ausgangssignal des ersten Speichers $(SM_1)$ zu erzeugen, das in einer Wiederholung der ersten Steuerfolge besteht, wobei die besagten Steuerfolgen in dem besagten Speicher unter durch einen Rechner gesteuerter Adressenverschiebung so gelesen werden, daß jede gelesene Folge der geschriebenen Folge mit einer Verschiebung der Zustandskonfigurationen in Abhängigkeit von dem Innenwinkel entspricht,

. während des Lesens des ersten Speichers (1) eine zweite Steuerfolge in dem anderen Speicher, dem sogennanten zweiten Speicher (2), geschrieben und gespeichert wird,

. auf Anweisung des Permutationssignals (SP, $\overline{SP}$) die Betriebsarten der beiden Speicher so permutiert werden, daß der erste Speicher mit Hinblick auf die eventuelle Speicherung einer neuen Steuerfolge in die Betriebsart Schreiben und der zweite Speicher in die Betriebsart Lesen versetzt wird, so daß er auf sich wiederholende Weise die zweite Steuerfolge von dem Abtastsignal (AL) an liest, um ein Ausgangssignal des zweiten Speichers (SM$_2$) zu erzeugen, das in einer Wiederholung der zweiten Steuerfolge besteht,

- daß die Permutationen der beiden Speicher auf Anweisung des Permutationssignals fortgesetzt werden, um die Abwicklung aufeinanderfolgender der ersten Phase ähnlicher Phasen zu bewirken und im Laufe jeder Phase den Ausgang des Speichers in der Betriebsart Lesen der Steuerung des statischen Umformers zuzuweisen, so daß diesem ein Steuersignal (SCI) geliefert wird, das in der Folge (SM) der Ausgangssignale des ersten Speichers (SM$_1$) und der Ausgangssignale des zweiten Speichers (SM$_2$) besteht.

3. Verfahren zur Steuerung eines statischen Umformers, bestehend aus einer Gruppe von Schaltern, von denen jeder zwei Zustände, offen oder geschlossen, hat, wobei das besagte Verfahren die Aufgabe hat, ein Signal zur Steuerung der Zustände der besagten Schalter (SCI) zu erzeugen, um Regelung des Innenwinkels einer asynchronen selbstgesteuerten elektrischen Wechselstrommaschine mit einem Rotor-Geber zu bewirken, wobei der besagte Geber Lageinformationen in numerischer Folge liefert, und zwar besteht das besagte Verfahren darin :

- daß von zwei Speichern (1, 2) Gebrauch gemacht wird, von denen jeder so beschaffen ist, daß er eine für eine Reihe von Zustandskonfigurationen repräsentative Steuerfolge (M) enthält, wobei sich jede Konfiguration aus durch die Gesamtheit der Schalter des statischen Umformers bestimmten Zuständen zusammensetzt,

- daß ein Abtastsignal (AL) erzeugt wird, das in der Lage ist, für jeden Speicher sequentielles Lesen der Steuerfolge, von Konfiguration zu Konfiguration, zu gewährleisten, wobei das besagte Abtastsignal (AL) aufgrund der von dem Rotor-Geber gelieferten Lageinformationen erzeugt wird, um, für jede Umdrehung des Rotors, eine Reihe von Leseadressen in den Speichern zu erfassen,

- daß ein Permutationssignal (SP, $\overline{SP}$) erzeugt wird, welches komplementäre Permutationsbefehle der Betriebsarten Lesen/Schreiben der beiden Speicher umfaßt, so daß diese dauernd in verschiedener Betriebsart verbleiben,

- daß in einer Initialisierphase eine erste Steuerfolge in dem in der Betriebsart Schreiben befindlichen Speicher, dem sogenannten ersten Speicher (1), geschrieben und gespeichert wird, und daß auf Anweisung des Permutationssignals (SP, $\overline{SP}$) die Betriebsarten der beiden Speicher permutiert werden,

- daß in einer ersten Phase :

. die erste in dem besagten ersten Speicher (1) enthaltene Steuerfolge auf sich wiederholende Weise von dem Abtastsignal (AL) an gelesen wird, um ein Ausgangssignal des ersten Speichers (SM$_1$) zu erzeugen, das in einer Wiederholung der ersten Steuerfolge besteht, wobei die besagten Steuerfolgen in den Speichern unter einer zu zeitlich kontinuierlicher Variation veranlaßten Adressenverschiebung gelesen werden, so daß jede gelesene Folge der geschriebenen Folge mit einer Zustandskonfigurationsverschiebung in Abhängigkeit von der gewünschten Frequenz der Rotor-Ströme entspricht,

. während des Lesens des ersten Speichers (1) eine zweite Steuerfolge in dem anderen Speicher, dem sogennanten zweiten Speicher (2), geschrieben und gespeichert wird,

. auf Anweisung des Permutationssignals (SP, $\overline{SP}$) die Betriebsarten der beiden Speicher so permutiert werden, daß der erste Speicher mit Hinblick auf die eventuelle Speicherung einer neuen Steuerfolge in die Betriebsart Schreiben und der zweite Speicher in die Betriebsart Lesen versetzt wird, so daß er auf sich wiederholende Weise die zweite Steuerfolge von dem Abtastsignal (AL) an liest, um ein Ausgangssignal des zweiten Speichers (SM$_2$) zu erzeugen, das in einer Wiederholung der zweiten Steuerfolge besteht,

- daß die Permutationen der beiden Speicher auf Anweisung des Permutationssignals fortgesetzt werden, um die Abwicklung aufeinanderfolgender der ersten Phase ähnlicher Phasen zu bewirken und im Laufe jeder Phase den Ausgang des Speichers in der Betriebsart Lesen der Steuerung des statischen Umformers zuzuweisen, so daß diesem ein Steuersignal (SCI) geliefert wird, das in der Folge (SM) der Ausgangssignale des ersten Speichers ($SM_1$) und der Ausgangssignale des zweiten Speichers ($SM_2$) besteht.

4. Verfahren nach einem der Ansprüche 1, 2 oder 3, dadurch gekennzeichnet, daß das ausgehend von durch einen Rechner gelieferten Steuerinformationen erzeugte Permutationssignal (SP, $\overline{SP}$) unter Zwischenschaltung von Hilfssynchronisationsmitteln geliefert wird, um die Permutationsbefehle zu validieren, wenn das Abtastsignal eine bestimmte Speicheradresse liefert.

5. Verfahren nach einem der Ansprüche 1 bis 4, bei dem die Steuerfolgen durch einen Rechner erzeugt werden, dadurch gekennzeichnet, daß während vorübergehender Steuerzeiten die Speicherausgänge im Verhältnis zum Umformer getrennt werden und dieser unmittelbar an den die Steuerfolgen liefernden Rechner angeschlossen wird.

6. Feinsteuerautomat zum Steuern eines statischen Umformers, insbesondere zum Speisen einer elektrischen Maschine aufgrund von von Gebern gelieferten Steuerinformationen (Steuerdaten (D), entsprechenden Steueradressen (A) und Informationen (C)), wobei der besagte Automat die folgenden Stufen umfaßt :

- zwei identische betriebliche Speicher (1, 2), von denen jeder mit einem Adressiereingang (a), einem Eingang/Ausgang für Daten (es) und einem Eingang für die Validierung der Betriebsart Lesen oder Schreiben (v) versehen ist,
- eine Einheit (8) für zeitlich gebundene Erzeugung von Leseadressen, die so beschaffen ist, daß sie die Steuerdaten (D) empfängt, und in der Lage ist, ein erstes in einer Reihe aufeinanderfolgender Adressen bestehendes Abtastsignal ($AL_1$) zu erzeugen,
- eine Einheit (5) zum Permutieren der Betriebsarten, die so beschaffen ist, daß sie die Steuerinformationen (D, A) empfängt und in der Lage ist, ein Permutationsbefehle umfassendes Permutationssignal (SP, $\overline{SP}$) zu erzeugen, wobei dieses Signal den Betriebsvalidiereingängen (v) der beiden Speicher (1, 2) zugeleitet wird,

- Speicheradressiermittel (3), die so beschaffen sind, daß sie ein Abtastsignal, die Steueradressen (A) und das Permutationssignal (SP, $\overline{SP}$) empfangen und in der Lage sind, Lese- oder Schreibadressen ($AM_1$, $AM_2$) an den Adressiereingängen (a) der beiden Speicher (1, 2) zu liefern,
- Lese/Schreibmittel (4), die so beschaffen sind, daß sie die Steuerdaten (D) und das Permutationssignal (SP, $\overline{SP}$) empfangen und in der Lage sind, die Steuerdaten (D) dem Speicher in der Betriebsart Schreiben zuzuleiten, den anderen Speicher zu lesen und im Ausgangszustand die in dem besagten Speicher (SM) enthaltenen Daten zu übertragen,

wobei der besagte Automat dadurch gekennzeichnet ist, daß er folgende Einheiten umfaßt :

- eine Signalaufbereitungseinheit (7), die so beschaffen ist, daß sie die von den Gebern gelieferten Informationen (C) empfängt und in der Lage ist, ein zweites Abtastsignal ($AL_2$), das in einer aufeinanderfolgenden Reihe von Adressen besteht, zu erzeugen,
- einen Adressenwählbaustein (6), der mit der Einheit für zeitlich gebundene Erzeugung (8) und der Aufbereitungseinheit (7) verbunden ist, um ein Abtastsignal (AL) zu wählen und das besagte gewählte Abtastsignal den Adressiermitteln (3) der Speicher zuzuleiten.

7. Steuerautomat nach Anspruch 6, dadurch gekennzeichnet, daß die Aufbereitungseinheit (7) einen Transcodierer (71) umfaßt, der so beschaffen ist, daß er ausgehend von den von den Gebern gelieferten Informationen (C) mit Hinblick auf die Erzeugung des zweiten Abtastsignals ($AL_2$) ein unmodifiziertes, binär verschlüsseltes Signal erzeugt.

8. Steuerautomat nach Anspruch 7, dadurch gekennzeichnet, daß die Aufbereitungseinheit (7) einen Wähler (72) umfaßt, der so beschaffen ist, daß er die Steuerdaten (D) und das erste Abtastsignal ($AL_1$) empfängt, sowie einen mit dem Ausgang des Wählers (72) und dem Ausgang des Transcodierers (71) in Verbindung stehenden Verschiebungsbaustein (73), der so beschaffen ist, daß er durch Verschiebung des von dem Transcodierer gelieferten verschlüsselten Binärsignals das zweite Abtastsignal (AL$_2$) liefert, wobei dessen Wert durch die Steuerdaten (D) oder das erste Abtastsignal (AL$_1$) bestimmt wird.

9. Steuerautomat nach einem der Ansprüche 6, 7 oder 8, dadurch gekennzeichnet, daß der Adressenwählbaustein (6) folgende Teile umfaßt :

. ein Kontrollregister (62), das so beschaffen ist, daß es die Steuerinformationen (D, A) empfängt und in der Lage ist, einen von der Anwendung abhängigen Wählbefehl zu liefern,

. und einen Zweikanalwähler (61), der so beschaffen ist, daß er das erste und das zweite Abtastsignal (AL$_1$, AL$_2$) empfängt und in der Lage ist, im Ausgangszustand eines der besagten Signale in Abhängigkeit von dem durch das Kontrollregister (62) gelieferten Wählbefehl zu liefern.

10. Steuerautomat nach einem der Ansprüche 6, 7, 8 oder 9, dadurch gekennzeichnet, daß die Betriebsartpermutationseinheit (5) ein mit einem Inverter (52) in Verbindung stehendes Kontrollregister (51) umfaßt, wobei diese so beschaffen sind, daß sie die Steuerinformationen (D, A) empfangen und in der Lage sind, ein von der Steuerstrategie abhängiges Permutationssignal (SP, $\overline{\text{SP}}$) zu liefern, wobei das besagte Signal Permutationsbefehle und deren Komplementärbefehle umfaßt.

11. Steuerautomat nach Anspruch 10, dadurch gekennzeichnet, daß die Betriebsartpermutationseinheit (5) Hilfssynchronisationsmittel umfaßt, die sich aus den folgenden Teilen zusammensetzen :

- einer Vergleichsstufe (53), die so beschaffen ist, daß sie die Steueradressen (A) und das gewählte Abtastsignal (AL) empfängt und in der Lage ist, ein Gleichheitssignal zu liefern,

- einem Validationsbaustein (54), der so beschaffen ist, daß er das von dem Kontrollregister (51) gelieferte Permutationssignal in Gegenwart eines Gleichheitssignals validiert und ein synchronisiertes Permutationssignal liefert,

- und einem Wähler (55), der in der Lage ist, im Ausgangszustand das synchronisierte Permutationssignal oder das von dem Kontrollregister gelieferte Permutationssignal zu wählen.

12. Steuerautomat nach einem der Ansprüche 6, 7, 8, 9, 10 oder 11, dadurch gekennzeichnet, daß die beiden betrieblichen Speicher, die Adressiermittel und die Lese/Schreibmittel in einem betrieblichen Speicher mit doppeltem Zugriff (10) für gleichzeitiges Lesen und Schreiben bestehen, wobei der besagte Speicher in zwei Zonen untergeteilt ist, die sich wechselweise in der Betriebsart Lesen und in der Betriebsart Schreiben befinden.

13. Steuerautomat nach einem der Ansprüche 6, 7, 8, 9, 10, 11 oder 12, dadurch gekennzeichnet, daß er die folgenden Teile umfaßt :

. ein Kontrollregister (91), das so beschaffen ist, daß es die Steuerinformationen (D, A) empfängt und in der Lage ist, ein von der Steuerstrategie abhängiges Zugriffssignal zu liefern,

. im Ausgangszustand Lese/Schreibmittel (4), einen Kanalwähler (9), der so beschaffen ist, daß er einerseits die in dem in der Betriebsart Lesen befindlichen Speicher gelesenen Daten (SM) und andererseits die Steuerdaten (D) liest und in der Lage ist, eine dieser Datengruppen in Abhängigkeit von dem in dem Kontrollregister (91) abgegebenen Zugriffssignal zu wählen.

Fig. 1

Sélecteur · 9 · SC1

SM1 · SM12

multi-plexeur · 4 · 41 · SM

mémoire 1 · 1

multi-plexeur · 3 · 31

Sélecteur · 6 · 61

AL2 · AL1

Module de décalage · 73 · 7

Trans--codeur · 71 · C

Sélecteur · 72

Horloge H.F. · 81

Diviseur programma--ble · 82

Compteur décompteur · 83 · 8

multi-plexeur · 42 · SP · SP

mémoire 2 · 2

multi-plexeur · 32

Compa--rateur

Inverseur · 52 · SP

module de validation · 53 · 54 · 5

Sélecteur · 55

84 · 74 · 75 · 52 · 51 · 56 · 91 · RC

D · A

Fig. 2

```
                          ┌──────────────────────┐
                          │   INITIALISATION     │
                          └──────────┬───────────┘
                                     ▼
              ┌──────────────────────────────────────────┐
              │   ECRITURE    MEMOIRE   1                 │
              └──────────────────────┬───────────────────┘
         ┌───────────────────────────┤
         │                           ▼
         │               ┌────────────────────┐
         │               │   PERMUTATION      │
         │               └──────────┬─────────┘
         │          ┌───────────────┼────────────────┐
         │          ▼                                ▼
         │   ┌──────────────┐              ┌──────────────┐
         │   │ ECRITURE     │              │ LECTURE      │
         │   │ MEMOIRE 2    │              │ MEMOIRE 1    │
         │   └──────────────┘              └──────────────┘
         │          └───────────────┬────────────────┘
         │                          ▼
         │               ┌────────────────────┐
         │               │   PERMUTATION      │
         │               └──────────┬─────────┘
         │          ┌───────────────┼────────────────┐
         │          ▼                                ▼
         │   ┌──────────────┐              ┌──────────────┐
         │   │ LECTURE      │              │ ECRITURE     │
         │   │ MEMOIRE  2   │              │ MEMOIRE 1    │
         │   └──────────────┘              └──────────────┘
         │          └───────────────┬────────────────┘
         └──────────────────────────┘
```

Fig. 3a

Fig. 3b

Fig. 3c

Fig. 3d

EP 0 293 994 B1

Fig. 3e

EP 0 293 994 B1

Fig. 4a

Fig. 4b

EP 0 293 994 B1

Fig. 5

EP 0 293 994 B1

Fig. 6

EP 0 293 994 B1

Fig. 7

EP 0 293 994 B1

Fig. 8